(19) Europäisches Patentamt / European Patent Office / Office européen des brevets

(11) **EP 2 947 879 B1**

(12) **EUROPEAN PATENT SPECIFICATION**

(45) Date of publication and mention of the grant of the patent:
**07.11.2018 Bulletin 2018/45**

(21) Application number: **14740467.7**

(22) Date of filing: **17.01.2014**

(51) Int Cl.:
*H04N 19/136* (2014.01)      *H04N 19/46* (2014.01)
*H04N 19/39* (2014.01)

(86) International application number:
**PCT/KR2014/000523**

(87) International publication number:
**WO 2014/112830 (24.07.2014 Gazette 2014/30)**

(54) **METHOD FOR DECODING VIDEO ON BASIS OF DECODER SETTING**

VERFAHREN ZUR VIDEODECODIERUNG AUF BASIS EINER DECODIEREREINSTELLUNG

PROCÉDÉ DE DÉCODAGE DE VIDÉO SUR LA BASE D'UN RÉGLAGE DE DÉCODEUR

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **17.01.2013 US 201361753610 P**

(43) Date of publication of application:
**25.11.2015 Bulletin 2015/48**

(73) Proprietor: **Samsung Electronics Co., Ltd.**
**Suwon-si, Gyeonggi-do 443-742 (KR)**

(72) Inventors:
• **CHOI, Jeong-yong**
**Seongnam-si**
**Gyeonggi-do 463-714 (KR)**
• **PARK, Pil-kyu**
**Seongnam-si**
**Gyeonggi-do 463-867 (KR)**
• **CHOI, Kwang-pyo**
**Anyang-si, Gyeonggi-do 430-801 (KR)**

(74) Representative: **Appleyard Lees IP LLP**
**15 Clare Road**
**Halifax HX1 2HY (GB)**

(56) References cited:
**JP-A- 2012 124 960      KR-A- 20070 098 429**
**KR-A- 20090 129 412      US-A- 6 111 913**
**US-A1- 2007 002 953      US-A1- 2010 111 183**

• **A VETRO ET AL: "Overview of the Stereo and Multiview Video Coding Extensions of the H.264/MPEG-4 AVC Standard", PROCEEDINGS OF THE IEEE, vol. 99, no. 4, 1 April 2011 (2011-04-01), pages 626-642, XP055132298, ISSN: 0018-9219, DOI: 10.1109/JPROC.2010.2098830**
• **Y-K WANG (QUALCOMM): "AHG9: Indication of frame-packed or interlaced video", 102. MPEG MEETING; 15-10-2012 - 19-10-2012; SHANGHAI; (MOTION PICTURE EXPERT GROUP OR ISO/IEC JTC1/SC29/WG11),, no. m26411, 15 October 2012 (2012-10-15), XP030054744,**
• **WOO-JIN HAN ET AL: "Improved Video Compression Efficiency Through Flexible Unit Representation and Corresponding Extension of Coding Tools", IEEE TRANSACTIONS ON CIRCUITS AND SYSTEMS FOR VIDEO TECHNOLOGY, IEEE SERVICE CENTER, PISCATAWAY, NJ, US, vol. 20, no. 12, 1 December 2010 (2010-12-01), pages 1709-1720, XP011329409, ISSN: 1051-8215, DOI: 10.1109/TCSVT.2010.2092612**
• **CABLELABS: "TM-AVC0466: OpenCable Content Encoding Profiles 3.0 Specification", DVB, DIGITAL VIDEO BROADCASTING, C/O EBU - 17A ANCIENNE ROUTE - CH-1218 GRAND SACONNEX, GENEVA - SWITZERLAND, 16 September 2010 (2010-09-16), XP017831700,**

**Description**

TECHNICAL FIELD

The present disclosure relates to a video encoding method and decoding method, and more particularly, to methods of encoding and decoding information for a decoder configuration.

BACKGROUND ART

As hardware for reproducing and storing high resolution or high quality video content is being developed and supplied, a need for a video codec for effectively encoding or decoding the high resolution or high quality video content is increasing. According to a conventional video codec, a video is encoded according to a limited encoding method based on a macroblock having a predetermined size.

Image data of a spatial region is transformed into coefficients of a frequency region via frequency transformation. According to a video codec, an image is split into blocks having a predetermined size, discrete cosine transformation (DCT) is performed for each respective block, and frequency coefficients are encoded in block units, for rapid calculation for frequency transformation. Compared with image data of a spatial region, coefficients of a frequency region are easily compressed. In particular, since an image pixel value of a spatial region is expressed according to a prediction error via inter prediction or intra prediction of a video codec, when frequency transformation is performed on the prediction error, a large amount of data may be transformed to 0. According to a video codec, an amount of data may be reduced by replacing data that is consecutively and repeatedly generated with small-sized data.

A multi-layer video codec encodes and decodes a base layer video and at least one enhancement layer video. Amounts of data of the base layer video and the enhancement layer video may be reduced by removing temporal/spatial redundancy and layer redundancy of the base layer video and the enhancement layer video.

Y-K Wang (Qualcomm): "AHG9: Indication of frame-packed or interlaced video", 102. MPEG Meeting, 15-10-2012 - 19-10-2012, Sanghai (Motion Picture Expert Group or ISO/IEC JTC1/SC20/WG11, no m 26411, 15 October 2012 proposes changes to information as defined in the HEVC coding specification. The independent claim appended hereto is characterized over this document. A Vetro et al; "Overview of the Stereo and Multiview Video Coding Extensions of the H.264/MPEG-4 AVC Standard", Proceedings of the IEEE, vol. 99, no 4, 1 April 2011, pages 626 - 642 discusses techniques to represent multiple views of a video scene.

DETAILED DESCRIPTION OF THE INVENTION

TECHNICAL PROBLEM

The present disclosure provides a video encoding method and apparatus for transmitting configuration information required to accurately reproduce an image reconstructed by a decoder. The present disclosure provides a video decoding method and apparatus for receiving configuration information required to accurately reproduce an image reconstructed by a decoder.

TECHNICAL SOLUTION

According to an aspect of the present disclosure, there is provided a video decoding method as defined by claim 1 appended hereto.

ADVANTAGEOUS EFFECTS

At least one of constraint information regarding a sample arrangement method and segmentation maximum size information may be determined as constraint information regarding a decoder configuration. A decoder may perform a decoding operation per sub-region in parallel by appropriately classifying sub-regions of encoded picture data from a data stream, based on the segmentation maximum size information. Also, the decoder may appropriately arrange samples reconstructed per picture/frame based on the constraint information regarding the sample arrangement method.

DESCRIPTION OF THE DRAWINGS

FIG. 1 is a block diagram of a video encoding apparatus according to some embodiments.

FIG. 2 is a block diagram of a video decoding apparatus according to some embodiments.

FIG. 3 is a diagram for describing a concept of coding units according to an embodiment.

FIG. 4 is a block diagram of an image encoder based on coding units, according to an embodiment.

FIG. 5 is a block diagram of an image decoder based on coding units, according to an embodiment.

FIG. 6 is a diagram illustrating deeper coding units according to depths, and partitions, according to an embodiment.

FIG. 7 is a diagram for describing a relationship between a coding unit and transformation units, according to an embodiment.

FIG. 8 is a diagram for describing encoding information of coding units corresponding to a coded depth, according to an embodiment.

FIG. 9 is a diagram of deeper coding units according to depths, according to an embodiment.

FIGS. 10 through 12 are diagrams for describing a relationship between coding units, prediction units, and transformation units, according to an embodiment.

FIG. 13 is a diagram for describing a relationship between a coding unit, a prediction unit, and a transformation unit, according to encoding mode information of Table 1.

FIG. 14 is a flowchart of a video encoding method for a decoder configuration, according to various embodiments.

FIG. 15 is a flowchart of a video decoding method for a decoder configuration, according to various embodiments.

FIGS. 16 and 17 illustrate various embodiments of a syntax for a decoder configuration.

FIGS. 18 through 21 are diagrams for describing a reconstruction process of an image of various frame packing types.

FIG. 22 illustrates another embodiment of a syntax for a decoder configuration.

FIG. 23 is a diagram for describing a byte alignment method of a variable length syntax and a fixed length syntax.

FIG. 24 is a diagram of a physical structure of a disc in which a program is stored, according to an embodiment.

FIG. 25 is a diagram of a disc drive for recording and reading a program by using a disc.

FIG. 26 is a diagram of an overall structure of a content supply system for providing a content distribution service.

FIGS. 27 and 28 are diagrams respectively of an external structure and an internal structure of a mobile phone to which a video encoding method and a video decoding method are applied, according to an embodiment.

FIG. 29 is a diagram of a digital broadcast system to which a communication system is applied, according to an embodiment.

FIG. 30 is a diagram illustrating a network structure of a cloud computing system using a video encoding apparatus and a video decoding apparatus, according to an embodiment.

BEST MODE

According to an aspect according to the present disclosure, there is provided a video decoding method including: receiving a data stream including network abstraction layer (NAL) units; obtaining constraint information indicating whether there is a constraint on an arrangement type of samples of a picture from the data stream; and determining an arrangement method of reconstructed samples generated by decoding an encoded picture based on the constraint information.

The obtaining may include obtaining the constraint information consisting of a maximum of 48 bits, from a video parameter set raw byte sequence payload (RBSP) area from among the NAL units.

The obtaining may include obtaining segmentation maximum size information, in an unsigned integer type having a fixed length, indicating a limit on a maximum size of each of sub-regions obtained by spatially splitting the encoded picture.

The video decoding method may further include: determining a maximum value of a number of luma samples of a segmentation based on an integer consisting of 12 bits, which is equal to or higher than 0 and is lower than 4096, indicated by the segmentation maximum size information; and decoding the encoded picture per sub-region by splitting the encoded picture into the sub-regions.

The constraint information may include progressive scan information indicating whether the reconstructed samples are arranged in a progressive scan type, and the determining may include determining whether the reconstructed samples are arranged in a progressive scan order based on the progressive scan information.

The constraint information may include frame constraint information indicating whether samples of a picture are encoded only in frame units from among picture units and frame units, and the determining may include determining whether the reconstructed samples include at least one frame based on the frame constraint information.

The constraint information may include interlaced scan information indicating whether reconstructed samples are arranged in an interlaced scan type, and the determining may include determining whether the reconstructed samples are arranged in an interlaced scan order based on the interlaced scan information.

The constraint information may include: determine constraint information about sample arrangement type based on arrangement method of samples of encoded picture constraint information indicating whether reconstructed samples are arranged in a type other than a frame packing type, and the determining may include determining whether the reconstructed samples are arranged in a type other than a frame packing type based on the non-frame packing constraint information.

According to another aspect according to the present disclosure, there is provided a video encoding method including: encoding samples of a picture; determining constraint information indicating whether there is a constraint on an arrangement type of the samples, based on an arrangement method of the samples; and generating a data stream comprising network abstraction layer (NAL) units comprising the constraint information.

The determining may include determining the constraint information consisting of a maximum of 48 bits, and the generating may include inserting the constraint information to a video parameter set raw byte sequence payload (RBSP) area from among the NAL units.

The encoding may include encoding the picture per sub-region by splitting the picture into at least one sub-region.

According to another aspect according to the present disclosure, there is provided a video decoding apparatus including: a data obtainer configured to receive a data stream including network abstraction layer (NAL) units, and obtain constraint information indicating whether there is a constraint on an arrangement type of samples of a picture from the data stream; and a picture decoder configured to reconstruct the samples by decoding symbols obtained from the data stream, and determine an arrangement method of the reconstructed samples based on the constraint information.

According to another aspect according to the present disclosure, there is provided a video encoding apparatus including: an encoder configured to encode samples of a picture; and a data stream generator configured to determine constraint information indicating whether there is a constraint on an arrangement type of the samples, based on an arrangement method of the samples, and generate a data stream including network abstraction layer (NAL) units including the constraint information.

According to another aspect according to the present disclosure, there is provided a computer-readable recording medium having recorded thereon a program for executing the video decoding method. According to another aspect according to the present disclosure, there is provided a computer-readable recording medium having recorded thereon a program for executing the video encoding method.

MODE OF THE INVENTION

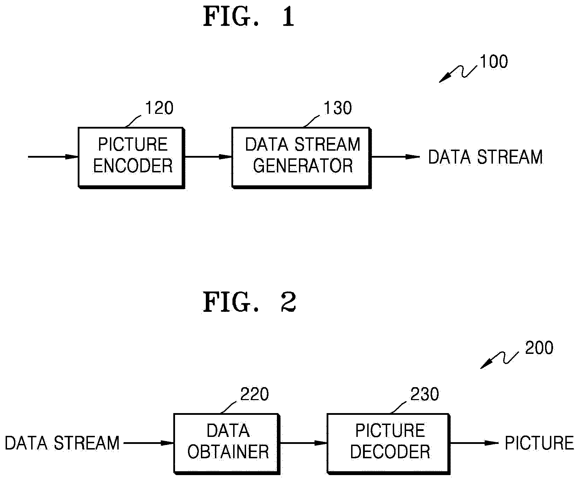

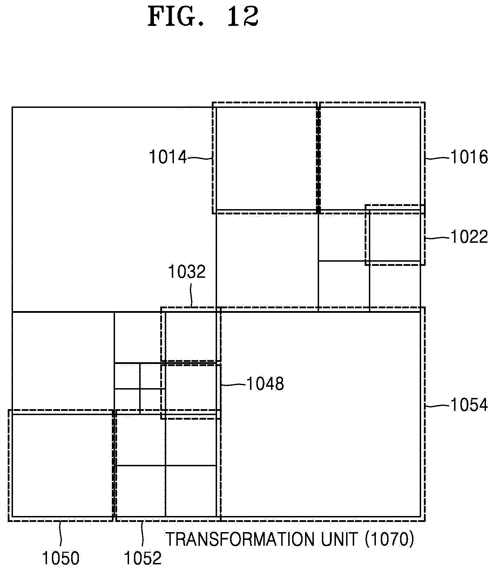

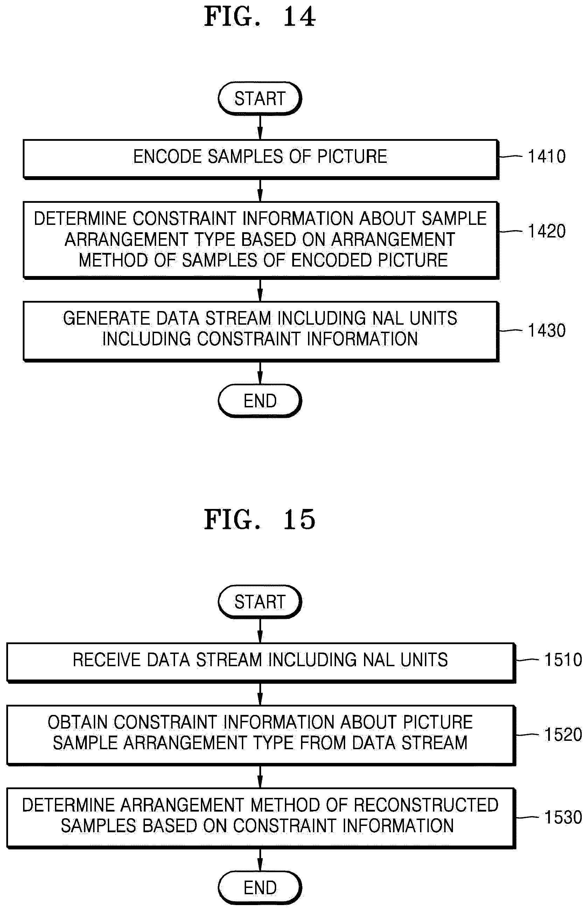

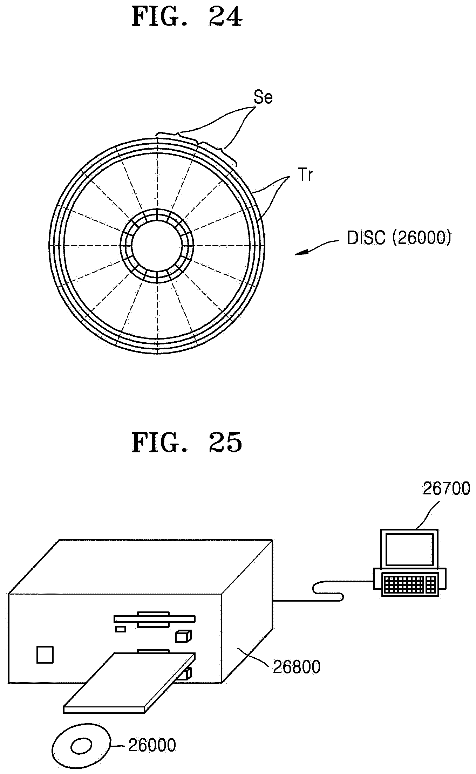

Hereinafter, a video encoding technique and a video decoding technique based on coding units having a tree structure will be described with reference to FIGS. 1 through 13. Also, a technique of determining, by a video encoding apparatus and a video decoding apparatus based on coding units having a tree structure, information for a decoder configuration, will be described with reference to FIGS. 14 through 24. Also, various embodiments to which a video encoding method and a video decoding method suggested with reference to FIGS. 1 through 24 are applicable will be described with reference to FIGS. 24 through 30.

Hereinafter, an 'image' may denote a still image or a moving image of a video, or a video itself.

Hereinafter, a 'sample' denotes data assigned to a sampling location of an image, wherein the data is a processing target. For example, pixels of an image in a spatial domain may be samples.

First, a video encoding method, a video encoding apparatus, a video decoding method, and a video decoding apparatus based on coding units having a tree structure and transformation units will be described with reference to FIGS. 1 through 13.

FIG. 1 is a block diagram of a video encoding apparatus 100 based on coding units according to a tree structure, according to an embodiment.

The video encoding apparatus 100 involving video prediction based on coding units according to a tree structure according to an embodiment includes a picture encoder 120 and a data stream generator 130. Hereinafter, for convenience of description, video encoding apparatus 100 involving video prediction based on coding units according to a tree structure according to an embodiment is referred to as 'the video encoding apparatus 100'.

The picture encoder 120 may split a current picture based on a maximum coding unit that is a coding unit having a maximum size for a current picture of an image. If the current picture is larger than the maximum coding unit, image data of the current picture may be split into the at least one maximum coding unit. The maximum coding unit according to an embodiment may be a data unit having a size of 32x32, 64x64, 128x128, 256x256, etc., wherein a shape of the data unit is a square having a width and length in squares of 2.

A coding unit according to an embodiment may be characterized by a maximum size and a depth. The depth denotes the number of times the coding unit is spatially split from the maximum coding unit, and as the depth deepens, deeper coding units according to depths may be split from the maximum coding unit to a minimum coding unit. A depth of the maximum coding unit is an uppermost depth and a depth of the minimum coding unit is a lowermost depth. Since a size of a coding unit corresponding to each depth decreases as the depth of the maximum coding unit deepens, a coding unit corresponding to an upper depth may include a plurality of coding units corresponding to lower depths.

As described above, the image data of the current picture is split into the maximum coding units according to a maximum size of the coding unit, and each of the maximum coding units may include deeper coding units that are split according to depths. Since the maximum coding unit according to an embodiment is split according to depths, the image data of a spatial domain included in the maximum coding unit may be hierarchically classified according to depths.

A maximum depth and a maximum size of a coding unit, which limit the total number of times a height and a width of the maximum coding unit are hierarchically split, may be predetermined.

The picture encoder 120 encodes at least one split region obtained by splitting a region of the maximum coding unit according to depths, and determines a depth to output a finally encoded image data according to the at least one split region. In other words, the picture encoder 120 determines a coded depth by encoding the image data in the deeper coding units according to depths, according to the maximum coding unit of the current picture, and selecting a depth having the least encoding error. The determined coded depth and the encoded image data according to the determined coded depth are output to the data stream generator.

The image data in the maximum coding unit is encoded based on the deeper coding units corresponding to at least one depth equal to or below the maximum depth, and results of encoding the image data are compared based on each of the deeper coding units. A depth having the least encoding error may be selected after comparing encoding errors of the deeper coding units. At least one coded depth may be selected for each maximum coding unit.

The size of the maximum coding unit is split as a coding unit is hierarchically split according to depths, and as the number of coding units increases. Also, even if coding units correspond to the same depth in one maximum coding unit, it is determined whether to split each of the coding units corresponding to the same depth to a lower depth by measuring an encoding error of the image data of the each coding unit, separately. Accordingly, even when image data is included in one maximum coding unit, the encoding errors may differ according to regions in the one maximum coding unit, and thus the coded depths may differ according to regions in the image data. Thus, one or more coded depths may be determined in one maximum coding unit, and the image data of the maximum coding unit may be divided according to coding units of at least one coded depth.

Accordingly, the picture encoder 120 according to an embodiment may determine coding units having a tree structure included in the maximum coding unit. The 'coding units having a tree structure' according to an embodiment include coding units corresponding to a depth determined to be the coded depth, from among all deeper coding units included in the maximum coding unit. A coding unit of a coded depth may be hierarchically determined according to depths in the same region of the maximum coding unit, and may be independently determined in different regions. Similarly, a coded depth in a current region may be independently determined from a coded depth in another region.

A maximum depth according to an embodiment is an index related to the number of splitting times from a maximum coding unit to a minimum coding unit. A first maximum depth according to an embodiment may denote the total number of splitting times from the maximum coding unit to the minimum coding unit. A second maximum depth according to an embodiment may denote the total number of depth levels from the maximum coding unit to the minimum coding unit. For example, when a depth of the maximum coding unit is 0, a depth of a coding unit, in which the maximum coding unit is split once, may be set to 1, and a depth of a coding unit, in which the maximum coding unit is split twice, may be set to 2. Here, if the minimum coding unit is a coding unit in which the maximum coding unit is split four times, 5 depth levels of depths 0, 1, 2, 3, and 4 exist, and thus the first maximum depth may be set to 4, and the second maximum depth may be set to 5.

Prediction encoding and transformation may be performed according to the maximum coding unit. The prediction encoding and the transformation are also performed based on the deeper coding units according to a depth equal to or depths less than the maximum depth, according to the maximum coding unit.

Since the number of deeper coding units increases whenever the maximum coding unit is split according to depths, encoding, including the prediction encoding and the transformation, is performed on all of the deeper coding units generated as the depth deepens. For convenience of description, the prediction encoding and the transformation will now be described based on a coding unit of a current depth, in a maximum coding unit.

The video encoding apparatus 100 according to an embodiment may variously select a size or shape of a data unit for encoding the image data. In order to encode the image data, operations, such as prediction encoding, transformation, and entropy encoding, are performed, and at this time, the same data unit may be used for all operations or different data units may be used for each operation.

For example, the video encoding apparatus 100 may select not only a coding unit for encoding the image data, but also a data unit different from the coding unit so as to perform the prediction encoding on the image data in the coding unit.

In order to perform prediction encoding in the maximum coding unit, the prediction encoding may be performed based on a coding unit corresponding to a coded depth, i.e., based on a coding unit that is no longer split to coding units corresponding to a lower depth. Hereinafter, the coding unit that is no longer split and becomes a basis unit for prediction encoding will now be referred to as a 'prediction unit'. A partition obtained by splitting the prediction unit may include a prediction unit or a data unit obtained by splitting at least one selected from a height and a width of the prediction unit. A partition is a data unit where a prediction unit of a coding unit is split, and a prediction unit may be a partition having the same size as a coding unit.

For example, when a coding unit of 2Nx2N (where N is a positive integer) is no longer split and becomes a prediction unit of 2Nx2N, and a size of a partition may be 2Nx2N, 2NxN, Nx2N, or NxN. Examples of a partition type include symmetrical partitions that are obtained by symmetrically splitting a height or width of the prediction unit, partitions obtained by asymmetrically splitting the height or width of the prediction unit, such as 1:n or n:1, partitions that are obtained by geometrically splitting the prediction unit, and partitions having arbitrary shapes.

A prediction mode of the prediction unit may be at least one selected from an intra mode, a inter mode, and a skip mode. For example, the intra mode or the inter mode may be performed on the partition of 2Nx2N, 2NxN, Nx2N, or NxN. Also, the skip mode may be performed only on the partition of 2Nx2N. The encoding is independently performed on one prediction unit in a coding unit, thereby selecting a prediction mode having a least encoding error.

The video encoding apparatus 100 according to an embodiment may also perform the transformation on the image data in a coding unit based not only on the coding unit for encoding the image data, but also based on a data unit that is different from the coding unit. In order to perform the transformation in the coding unit, the transformation may be performed based on a data unit having a size smaller than or equal to the coding unit. For example, the data unit for the transformation may include a data unit for an intra mode and a data unit for an inter mode.

The transformation unit in the coding unit may be recursively split into smaller sized regions in a manner similar to that in which the coding unit is split according to the tree structure according to an embodiment. Thus, residual data in the coding unit may be divided according to the transformation unit having the tree structure according to transformation depths.

A transformation depth indicating the number of splitting times to reach the transformation unit by splitting the height and width of the coding unit may also be set in the transformation unit according to an embodiment. For example, in a current coding unit of 2Nx2N, a transformation depth may be 0 when the size of a transformation unit is 2Nx2N, may be 1 when the size of the transformation unit is NxN, and may be 2 when the size of the transformation unit is N/2xN/2. In other words, the transformation unit having the tree structure may be set according to the transformation depths.

Encoding information according to coding units corresponding to a coded depth requires not only information about the coded depth, but also about information related to prediction encoding and transformation. Accordingly, the picture encoder 120 not only determines a coded depth having a least encoding error, but also determines a partition type in a prediction unit, a prediction mode according to prediction units, and a size of a transformation unit for transformation.

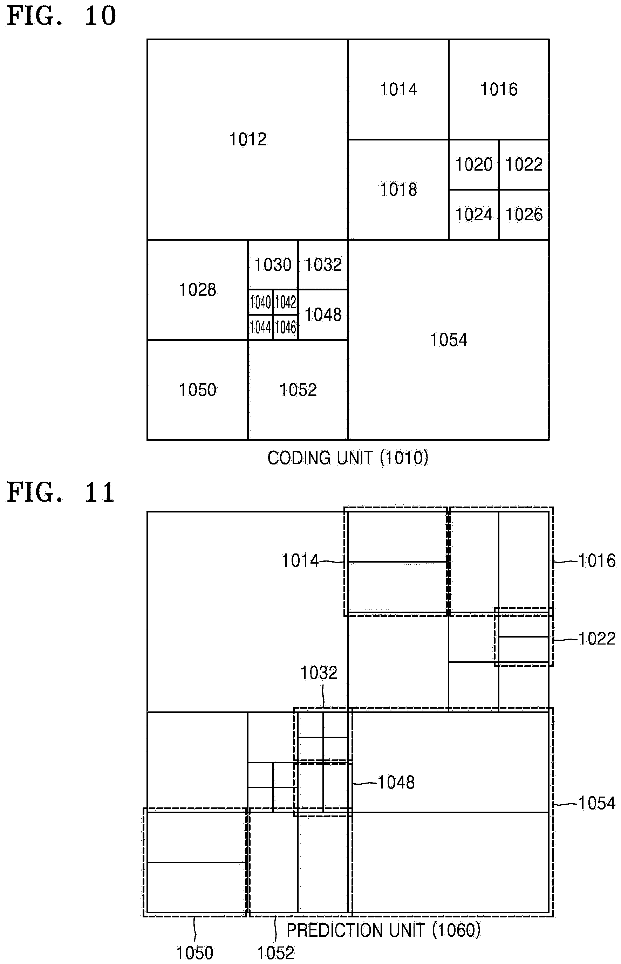

Coding units according to a tree structure in a maximum coding unit and methods of determining a prediction unit/partition, and a transformation unit, according to embodiments, will be described in detail later with reference to FIGS. 10 through 20.

The picture encoder 120 may measure an encoding error of deeper coding units according to depths by using Rate-Distortion Optimization based on Lagrangian multipliers.

The data stream generator 130 outputs the image data of the maximum coding unit, which is encoded based on the at least one coded depth determined by the picture encoder 120, and information about the encoding mode according to the coded depth, in data streams.

The encoded image data may be obtained by encoding residual data of an image.

The information about the encoding mode according to coded depth may include information about the coded depth, about the partition type in the prediction unit, the prediction mode, and the size of the transformation unit.

The information about the coded depth may be defined by using split information according to depths, which indicates whether encoding is performed on coding units of a lower depth instead of a current depth. If the current depth of the current coding unit is the coded depth, image data in the current coding unit is encoded and output, and thus the split information may be defined not to split the current coding unit to a lower depth. Alternatively, if the current depth of the current coding unit is not the coded depth, the encoding is performed on the coding unit of the lower depth, and thus the split information may be defined to split the current coding unit to obtain the coding units of the lower depth.

If the current depth is not the coded depth, encoding is performed on the coding unit that is split into the coding unit of the lower depth. Since at least one coding unit of the lower depth exists in one coding unit of the current depth, the encoding is repeatedly performed on each coding unit of the lower depth, and thus the encoding may be recursively performed for the coding units having the same depth.

Since the coding units having a tree structure are determined for one maximum coding unit, and information about at least one encoding mode is determined for a coding unit of a coded depth, information about at least one encoding mode may be determined for one maximum coding unit. Also, a coded depth of the image data of the maximum coding unit may be different according to locations since the image data is hierarchically split according to depths, and thus information about the coded depth and the encoding mode may be set for the image data.

Accordingly, the data stream generator 130 according to an embodiment may assign encoding information about a corresponding coded depth and an encoding mode to at least one selected from the coding unit, the prediction unit, and a minimum unit included in the maximum coding unit.

The minimum unit according to an embodiment is a square data unit obtained by splitting the minimum coding unit constituting the lowermost depth by 4. Alternatively, the minimum unit according to an embodiment may be a maximum square data unit that may be included in all of the coding units, prediction units, partition units, and transformation units included in the maximum coding unit.

For example, the encoding information output by the data stream generator 130 may be classified into encoding information according to deeper coding units, and encoding information according to prediction units. The encoding information according to the deeper coding units may include the information about the prediction mode and about the size of the partitions. The encoding information according to the prediction units may include information about an estimated direction of an inter mode, about a reference image index of the inter mode, about a motion vector, about a chroma component of an intra mode, and about an interpolation method of the intra mode.

Information about a maximum size of the coding unit defined according to pictures, slices, or GOPs, and information about a maximum depth may be inserted into a header of a data stream, a sequence parameter set, or a picture parameter set.

Information about a maximum size of the transformation unit permitted with respect to a current video, and information about a minimum size of the transformation unit may also be output through a header of a data stream, a sequence parameter set, or a picture parameter set. The data stream generator 130 may encode and output reference information related to prediction, prediction information, and slice type information.

In the video encoding apparatus 100, the deeper coding unit may be a coding unit obtained by dividing a height or width of a coding unit of an upper depth, which is one layer above, by two. In other words, when the size of the coding unit of the current depth is 2Nx2N, the size of the coding unit of the lower depth is NxN. Also, the coding unit with the current depth having a size of 2Nx2N may include a maximum of 4 of the coding units with the lower depth.

Accordingly, the video encoding apparatus 100 may form the coding units having the tree structure by determining coding units having an optimum shape and an optimum size for each maximum coding unit, based on the size of the maximum coding unit and the maximum depth determined considering characteristics of the current picture. Also, since encoding may be performed on each maximum coding unit by using any one of various prediction modes and transformations, an optimum encoding mode may be determined considering characteristics of the coding unit of various image sizes.

Thus, if an image having a high resolution or a large data amount is encoded in a conventional macroblock, the number of macroblocks per picture excessively increases. Accordingly, the number of pieces of compressed information generated for each macroblock increases, and thus it is difficult to transmit the compressed information and data compression efficiency decreases. However, by using the video encoding apparatus 100, image compression efficiency may be increased since a coding unit is adjusted while considering characteristics of an image while increasing a maximum size of a coding unit while considering a size of the image.

The inter-layer video encoding apparatus 10 described above with reference to FIG. 1 may include as many video encoding apparatuses 100 as the number of layers, in order to encode single-layer images according to layers of a multi-layer video. For example, a first encoder layer 12 may include one video encoding apparatus 100, and a second layer encoder 14 may include as many video encoding apparatuses 100 as the number of second layers.

When the video encoding apparatus 100 encodes first layer images, the picture encoder 120 may determine, for each maximum coding unit, a prediction unit for inter-prediction according to coding units having a tree structure, and perform inter-prediction according to prediction units.

Even when the video encoding apparatus 100 encodes second layer images, the picture encoder 120 may determine, for each maximum coding unit, a prediction unit for inter-prediction according to coding units having a tree structure, and perform inter-prediction according to prediction units.

The video encoding apparatus 100 may encode a luminance difference in order to compensate for a luminance difference between a first layer image and a second layer image. Here, whether to compensate for a luminance difference may be determined based on an encoding mode of a coding unit. For example, luminance may be compensated for only for a prediction unit having a size of 2Nx2N.

FIG. 2 is a block diagram of a video decoding apparatus 200 based on coding units having a tree structure, according to some embodiments.

The video decoding apparatus 200 that involves video prediction based on coding units having a tree structure according to an embodiment includes a data obtainer 220 and a picture decoder 230. Hereinafter, for convenience of description, the video decoding apparatus 200 involving video prediction based on coding units according to a tree structure according to an embodiment is referred to as 'the video decoding apparatus 200'.

Definitions of various terms, such as a coding unit, a depth, a prediction unit, a transformation unit, and information about various encoding modes, for decoding operations of the video decoding apparatus 200 are identical to those described with reference to FIG. 1 and the video encoding apparatus 100.

The data obtainer 220 receives and parses a data stream of an encoded video. The data obtainer 220 extracts encoded image data for each coding unit from a parsed bitstream, wherein the coding units have a tree structure according to each maximum coding unit, and outputs the extracted image data to the picture decoder 230. The data obtainer 220 may extract information about a maximum size of a coding unit of a current picture, from a header about the current picture, a sequence parameter set, or a picture parameter set.

Also, the data obtainer 220 extracts information about a coded depth and an encoding mode for the coding units having a tree structure according to each maximum coding unit, from the parsed bitstream. The extracted information about the coded depth and the encoding mode is output to the picture decoder 230. In other words, the encoded image data is split into the maximum coding unit so that the picture decoder 230 decodes the image data for each maximum coding unit.

The information about the coded depth and the encoding mode according to the maximum coding unit may be set for information about at least one coding unit corresponding to the coded depth, and information about an encoding mode may include information about a partition type of a corresponding coding unit corresponding to the coded depth, about a prediction mode, and a size of a transformation unit. Also, splitting information according to depths may be extracted as the information about the coded depth.

The information about the coded depth and the encoding mode according to each maximum coding unit extracted by the data obtainer 220 is information about a coded depth and an encoding mode determined to generate a minimum encoding error when an encoder, such as the video encoding apparatus 100 according to an embodiment, repeatedly performs encoding for each deeper coding unit according to depths according to each maximum coding unit. Accordingly, the video decoding apparatus 200 may reconstruct an image by decoding the image data according to a coded depth and an encoding mode that generates the minimum encoding error.

Since encoding information about the coded depth and the encoding mode according to an embodiment may be assigned to a predetermined data unit from among a corresponding coding unit, a prediction unit, and a minimum unit, the data obtainer 220 may extract the information about the coded depth and the encoding mode according to the predetermined data units. If information about a coded depth and encoding mode of a corresponding maximum coding unit is recorded according to predetermined data units, the predetermined data units to which the same information about the coded depth and the encoding mode is assigned may be inferred to be the data units included in the same maximum coding unit.

The picture decoder 230 reconstructs the current picture by decoding the image data in each maximum coding unit based on the information about the coded depth and the encoding mode according to the maximum coding units. In other words, the picture decoder 230 may decode the encoded image data based on the extracted information about the partition type, the prediction mode, and the transformation unit for each coding unit from among the coding units having the tree structure included in each maximum coding unit. A decoding process may include a prediction including intra prediction and motion compensation, and an inverse transformation.

The picture decoder 230 may perform intra prediction or motion compensation according to a partition and a prediction mode of each coding unit, based on the information about the partition type and the prediction mode of the prediction unit of the coding unit according to coded depths.

In addition, the picture decoder 230 may read information about a transformation unit according to a tree structure for each coding unit so as to perform inverse transformation based on transformation units for each coding unit, for inverse transformation for each maximum coding unit. Via the inverse transformation, a pixel value of a spatial region of the coding unit may be reconstructed.

The picture decoder 230 may determine a coded depth of a current maximum coding unit by using split information according to depths. If the split information indicates that image data is no longer split in the current depth, the current depth is a coded depth. Accordingly, the picture decoder 230 may decode encoded data in the current maximum coding unit by using the information about the partition type of the prediction unit, the prediction mode, and the size of the transformation unit for each coding unit corresponding to the coded depth.

In other words, data units containing the encoding information including the same split information may be gathered by observing the encoding information set assigned for the predetermined data unit from among the coding unit, the prediction unit, and the minimum unit, and the gathered data units may be considered to be one data unit to be decoded by the picture decoder 230 in the same encoding mode. As such, the current coding unit may be decoded by obtaining the information about the encoding mode for each coding unit.

The inter-layer video decoding apparatus 20 described above with reference to FIG. 2 may include as many video decoding apparatuses 200 as the number of layers, so as to reconstruct first layer images and second layer images by decoding a first layer image stream and a second layer image stream.

When a first layer image stream is received, the picture decoder 230 of the video decoding apparatus 200 may split samples of first layer images extracted from the first layer image stream by the data obtainer 220 into coding units having a tree structure. The picture decoder 230 may reconstruct the first layer images by performing motion compensation according to prediction units for inter-prediction, on the coding units having the tree structure obtained by splitting the samples of the first layer images.

When a second layer image stream is received, the picture decoder 230 of the video decoding apparatus 200 may split samples of second layer images extracted from the second layer image stream by the data obtainer 220 into coding units having a tree structure. The picture decoder 230 may reconstruct the second layer images by performing motion compensation according to prediction units for inter-prediction, on the coding units having the tree structure obtained by splitting the samples of the second layer images.

The data obtainer 220 may obtain information related to a luminance error from a bitstream in order to compensate for a luminance difference between a first layer image and a second layer image. Here, whether to compensate for a luminance difference may be determined based on an encoding mode of a coding unit. For example, luminance may be compensated for only for a prediction unit having a size of 2Nx2N.

Thus, the video decoding apparatus 200 may obtain information about at least one coding unit that generates the minimum encoding error when encoding is recursively performed for each maximum coding unit, and may use the information to decode the current picture. In other words, the coding units having the tree structure determined to be the optimum coding units in each maximum coding unit may be decoded.

Accordingly, even if image data has high resolution and a large amount of data, the image data may be efficiently decoded and reconstructed by using a size of a coding unit and an encoding mode, which are adaptively determined according to characteristics of the image data, by using information about an optimum encoding mode received from an encoder.

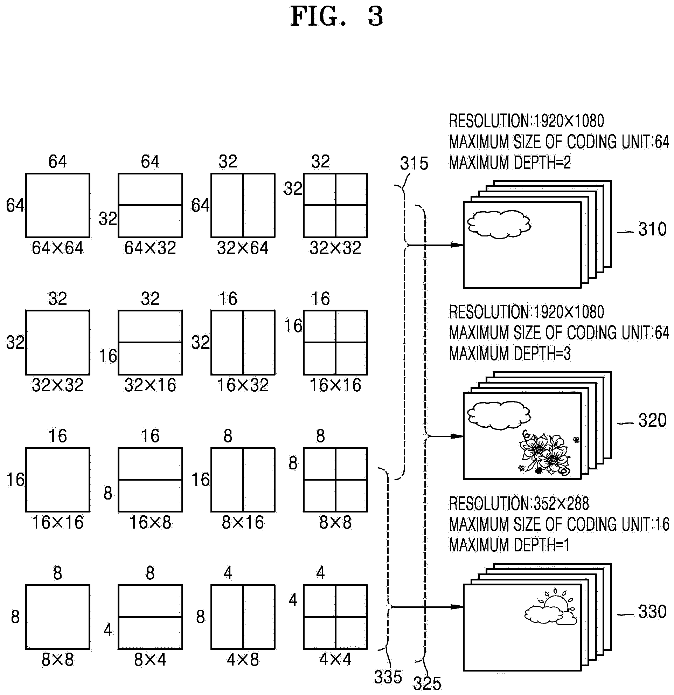

FIG. 3 is a diagram for describing a concept of coding units according to some embodiments.

A size of a coding unit may be expressed by width x height, and may be 64x64, 32x32, 16x16, and 8x8. A coding unit of 64x64 may be split into partitions of 64x64, 64x32, 32x64, or 32x32, and a coding unit of 32x32 may be split into partitions of 32x32, 32x16, 16x32, or 16x16, a coding unit of 16x16 may be split into partitions of 16x16, 16x8, 8x16, or 8x8, and a coding unit of 8x8 may be split into partitions of 8x8, 8x4, 4x8, or 4x4.

In video data 310, a resolution is 1920x1080, a maximum size of a coding unit is 64, and a maximum depth is 2. In video data 320, a resolution is 1920x1080, a maximum size of a coding unit is 64, and a maximum depth is 3. In video data 330, a resolution is 352x288, a maximum size of a coding unit is 16, and a maximum depth is 1. The maximum depth shown in FIG. 3 denotes a total number of splits from a maximum coding unit to a minimum decoding unit.

If a resolution is high or a data amount is large, a maximum size of a coding unit may be large so as to not only increase encoding efficiency but also to accurately reflect characteristics of an image. Accordingly, the maximum size of the coding unit of the video data 310 and 320 having a higher resolution than the video data 330 may be 64.

Since the maximum depth of the video data 310 is 2, coding units 315 of the vide data 310 may include a maximum coding unit having a long axis size of 64, and coding units having long axis sizes of 32 and 16 since depths are deepened to two layers by splitting the maximum coding unit twice. Since the maximum depth of the video data 330 is 1, coding units 335 of the video data 330 may include a maximum coding unit having a long axis size of 16, and coding units having a long axis size of 8 since depths are deepened to one layer by splitting the maximum coding unit once.

Since the maximum depth of the video data 320 is 3, coding units 325 of the video data 320 may include a maximum coding unit having a long axis size of 64, and coding units having long axis sizes of 32, 16, and 8 since the depths are deepened to 3 layers by splitting the maximum coding unit three times. As a depth deepens, detailed information may be precisely expressed.

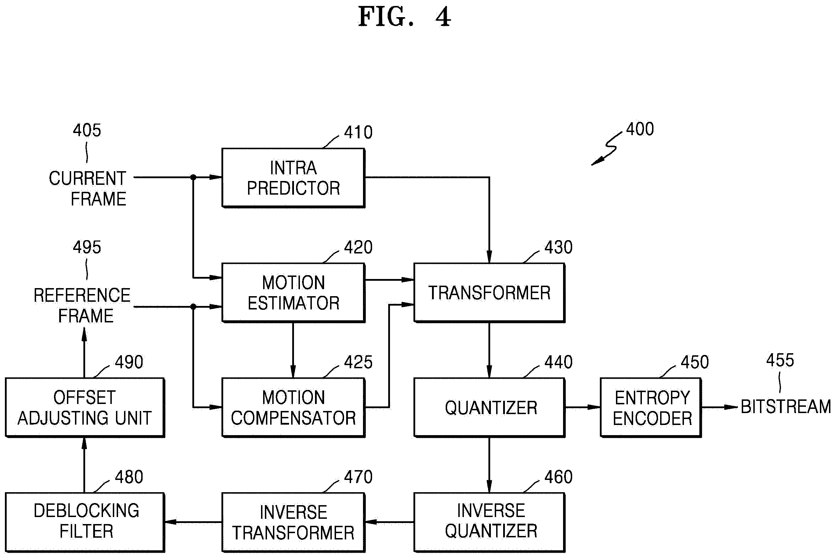

FIG. 4 is a block diagram of an image encoder 400 based on coding units, according to some embodiments.

The image encoder 400 according to an embodiment performs operations of the coding unit determiner 120 of the video encoding apparatus 100 to encode image data. In other words, an intra predictor 410 performs intra prediction on coding units in an intra mode, from among a current frame 405, and a motion estimator 420 and a motion compensator 425 respectively perform inter estimation and motion compensation on coding units in an inter mode from among the current frame 405 by using the current frame 405, and a reference frame 495.

Data output from the intra predictor 410, the motion estimator 420, and the motion compensator 425 is output as a quantized transformation coefficient through a transformer 430 and a quantizer 440. The quantized transformation coefficient is reconstructed as data in a spatial domain through an inverse quantizer 460 and an inverse transformer 470, and the reconstructed data in the spatial domain is output as the reference frame 495 after being post-processed through a deblocking unit 480 and an offset adjusting unit 490. The quantized transformation coefficient may be output as a bitstream 455 through an entropy encoder 450.

In order for the image encoder 400 to be applied in the video encoding apparatus 100 according to an embodiment, all elements of the image encoder 400, i.e., the intra predictor 410, the motion estimator 420, the motion compensator 425, the transformer 430, the quantizer 440, the entropy encoder 450, the inverse quantizer 460, the inverse transformer 470, the deblocking unit 480, and the offset adjusting unit 490 perform operations based on each coding unit among coding units having a tree structure while considering the maximum depth of each maximum coding unit.

Specifically, the intra predictor 410, the motion estimator 420, and the motion compensator 425 determines partitions and a prediction mode of each coding unit from among the coding units having a tree structure while considering the maximum size and the maximum depth of a current maximum coding unit, and the transformer 430 determines the size of the transformation unit in each coding unit from among the coding units having a tree structure.

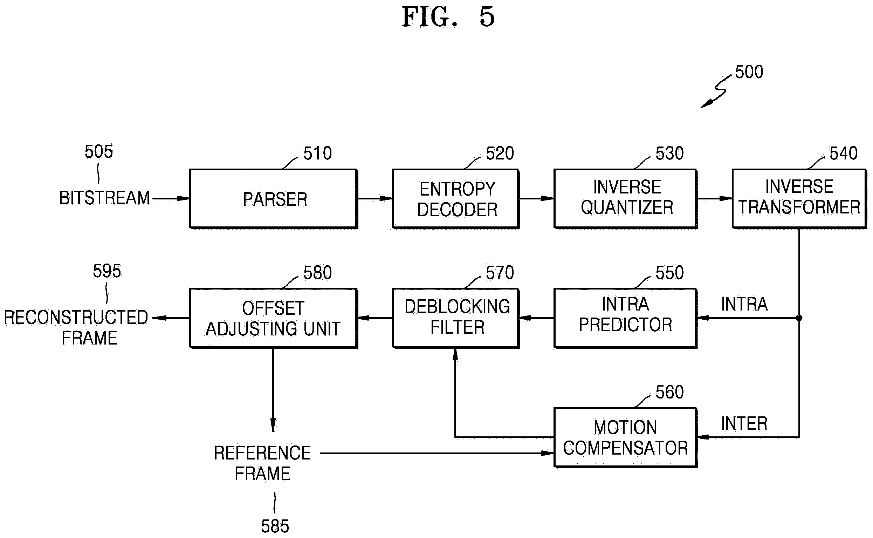

FIG. 5 is a block diagram of an image decoder 500 based on coding units, according to some embodiments.

A parser 510 parses encoded image data to be decoded and information about encoding required for decoding from a bitstream 505. The encoded image data is output as inverse quantized data through an entropy decoder 520 and an inverse quantizer 530, and the inverse quantized data is reconstructed to image data in a spatial domain through an inverse transformer 540.

An intra predictor 550 performs intra prediction on coding units in an intra mode with respect to the image data in the spatial domain, and a motion compensator 560 performs motion compensation on coding units in an inter mode by using a reference frame 585.

The image data in the spatial domain, which passed through the intra predictor 550 and the motion compensator 560, may be output as a reconstructed frame 595 after being post-processed through a deblocking unit 570 and an offset adjustor 580. Also, the image data that is post-processed through the deblocking unit 570 and the offset adjustor 580 may be output as the reference frame 585.

In order to decode the image data in the image data decoder 230 of the video decoding apparatus 200, the image decoder 500 according to an embodiment may perform operations that are performed after the parser 510.

In order for the image decoder 500 to be applied in the video decoding apparatus 200, all elements of the image decoder 500, i.e., the parser 510, the entropy decoder 520 according to an embodiment, the inverse quantizer 530, the inverse transformer 540, the intra predictor 550, the motion compensator 560, the deblocking unit 570, and the offset adjustor 580 perform operations based on coding units having a tree structure for each maximum coding unit.

Specifically, the intra prediction 550 and the motion compensator 560 perform operations based on partitions and a prediction mode for each of the coding units having a tree structure, and the inverse transformer 540 perform operations based on a size of a transformation unit for each coding unit.

An encoding operation of FIG. 4 and a decoding operation of FIG. 5 are respectively video stream encoding and decoding operations in a single layer. Accordingly, when the encoder 12 of FIG. 1 encodes a video stream of at least two layers, the image encoder 400 may be included per layer. Similarly, when a decoder 26 of FIG. 2 decodes a video stream of at least two layers, the image decoder 500 may be included per layer.

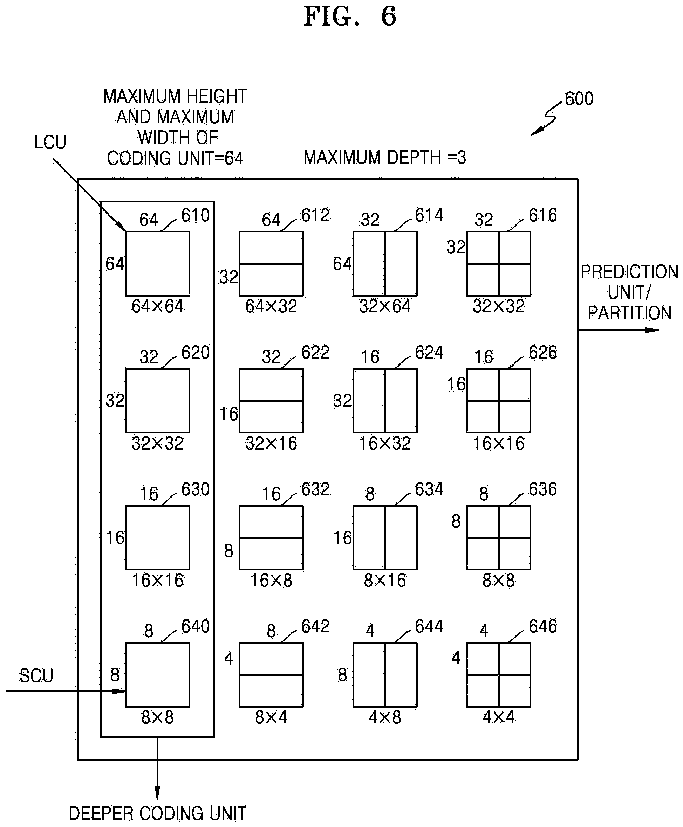

FIG. 6 is a diagram illustrating deeper coding units according to depths, and partitions, according to some embodiments.

The video encoding apparatus 100 according to an embodiment and the video decoding apparatus 200 according to an embodiment use hierarchical coding units so as to consider characteristics of an image. A maximum height, a maximum width, and a maximum depth of coding units may be adaptively determined according to the characteristics of the image, or may be differently set by a user. Sizes of deeper coding units according to depths may be determined according to the predetermined maximum size of the coding unit.

In a hierarchical structure 600 of coding units according to an embodiment, the maximum height and the maximum width of the coding units are each 64, and the maximum depth is 3. In this case, the maximum depth refers to a total number of times the coding unit is split from the maximum coding unit to the minimum coding unit. Since a depth deepens along a vertical axis of the hierarchical structure 600 according to an embodiment, a height and a width of the deeper coding unit are each split. Also, a prediction unit and partitions, which are bases for prediction encoding of each deeper coding unit, are shown along a horizontal axis of the hierarchical structure 600.

In other words, a coding unit 610 is a maximum coding unit in the hierarchical structure 600, wherein a depth is 0 and a size, i.e., a height by width, is 64x64. The depth deepens along the vertical axis, and a coding unit 620 having a size of 32x32 and a depth of 1, a coding unit 630 having a size of 16x16 and a depth of 2, and a coding unit 640 having a size of 8x8 and a depth of 3. The coding unit 640 having a size of 8x8 and a depth of 3 is a minimum coding unit.

The prediction unit and the partitions of a coding unit are arranged along the horizontal axis according to each depth. In other words, if the coding unit 610 having a size of 64x64 and a depth of 0 is a prediction unit, the prediction unit may be split into partitions include in the encoding unit 610, i.e. a partition 610 having a size of 64x64, partitions 612 having the size of 64x32, partitions 614 having the size of 32x64, or partitions 616 having the size of 32x32.

Similarly, a prediction unit of the coding unit 620 having the size of 32x32 and the depth of 1 may be split into partitions included in the coding unit 620, i.e. a partition 620 having a size of 32x32, partitions 622 having a size of 32x16, partitions 624 having a size of 16x32, and partitions 626 having a size of 16x16.

Similarly, a prediction unit of the coding unit 630 having the size of 16x16 and the depth of 2 may be split into partitions included in the coding unit 630, i.e. a partition having a size of 16x16 included in the coding unit 630, partitions 632 having a size of 16x8, partitions 634 having a size of 8x16, and partitions 636 having a size of 8x8.

Similarly, a prediction unit of the coding unit 640 having the size of 8x8 and the depth of 3 may be split into partitions included in the coding unit 640, i.e. a partition having a size of 8x8 included in the coding unit 640, partitions 642 having a size of 8x4, partitions 644 having a size of 4x8, and partitions 646 having a size of 4x4.

In order to determine the at least one coded depth of the coding units constituting the maximum coding unit 610, the coding unit determiner 120 of the video encoding apparatus 100 according to an embodiment performs encoding for coding units corresponding to each depth included in the maximum coding unit 610.

A number of deeper coding units according to depths including data in the same range and the same size increases as the depth deepens. For example, four coding units corresponding to a depth of 2 are required to cover data that is included in one coding unit corresponding to a depth of 1. Accordingly, in order to compare encoding results of the same data according to depths, the coding unit corresponding to the depth of 1 and four coding units corresponding to the depth of 2 are each encoded.

In order to perform encoding for a current depth from among the depths, a least encoding error may be selected for the current depth by performing encoding for each prediction unit in the coding units corresponding to the current depth, along the horizontal axis of the hierarchical structure 600. Alternatively, the minimum encoding error may be searched for by comparing the least encoding errors according to depths, by performing encoding for each depth as the depth deepens along the vertical axis of the hierarchical structure 600. A depth and a partition having the minimum encoding error in the coding unit 610 may be selected as the coded depth and a partition type of the coding unit 610.

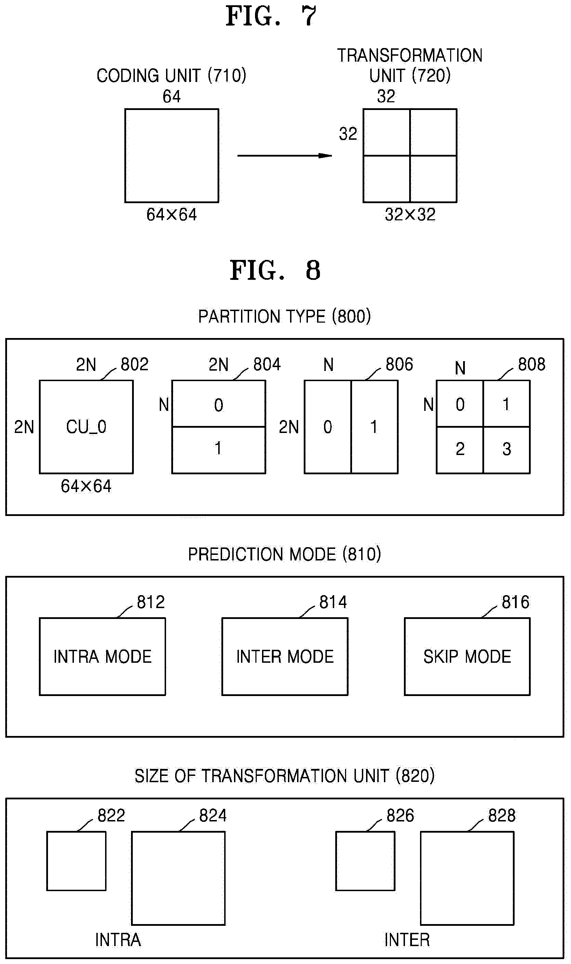

FIG. 7 is a diagram for describing a relationship between a coding unit and transformation units, according to some embodiments.

The video encoding apparatus 100 according to an embodiment or the video decoding apparatus 200 according to an embodiment encodes or decodes an image according to coding units having sizes smaller than or equal to a maximum coding unit for each maximum coding unit. Sizes of transformation units for transformation during encoding may be selected based on data units that are not larger than a corresponding coding unit.

For example, in the video encoding apparatus 100 according to an embodiment or the video decoding apparatus 200 according to an embodiment, if a size of the coding unit 710 is 64x64, transformation may be performed by using the transformation units 720 having a size of 32x32.

Also, data of the coding unit 710 having the size of 64x64 may be encoded by performing the transformation on each of the transformation units having the size of 32x32, 16x16, 8x8, and 4x4, which are smaller than 64x64, and then a transformation unit having the least coding error may be selected.

FIG. 8 is a diagram fro describing encoding information of coding units corresponding to a coded depth, according to some embodiments.

The data stream generator 130 of the video encoding apparatus 100 according to an embodiment may encode and transmit information 800 about a partition type, information 810 about a prediction mode, and information 820 about a size of a transformation unit for each coding unit corresponding to a coded depth, as information about an encoding mode.

The information 800 indicates information about a shape of a partition obtained by splitting a prediction unit of a current coding unit, wherein the partition is a data unit for prediction encoding the current coding unit. For example, a current coding unit CU_0 having a size of 2Nx2N may be split into any one of a partition 802 having a size of 2Nx2N, a partition 804 having a size of 2NxN, a partition 806 having a size of Nx2N, and a partition 808 having a size of NxN. Here, the information 800 about a partition type is set to indicate one of the partition 804 having a size of 2NxN, the partition 806 having a size of Nx2N, and the partition 808 having a size of NxN.

The information 810 indicates a prediction mode of each partition. For example, the information 810 may indicate a mode of prediction encoding performed on a partition indicated by the information 800, i.e., an intra mode 812, an inter mode 814, or a skip mode 816.

The information 820 indicates a transformation unit to be based on when transformation is performed on a current coding unit. For example, the transformation unit may be a first intra transformation unit 822, a second intra transformation unit 824, a first inter transformation unit 826, or a second intra transformation unit 828.

The data obtainer 220 of the video decoding apparatus 200 according to an embodiment may extract and use the information 800, 810, and 820 for decoding, according to each deeper coding unit.

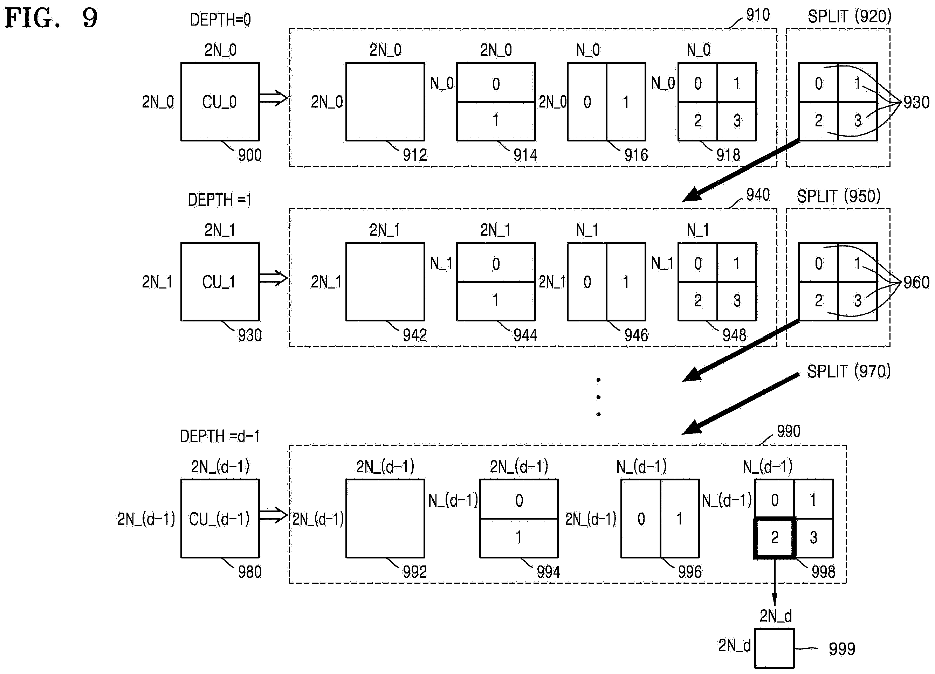

FIG. 9 is a diagram of deeper coding units according to depths, according to some embodiments.

Split information may be used to indicate a change of a depth. The spilt information indicates whether a coding unit of a current depth is split into coding units of a lower depth.

A prediction unit 910 for prediction encoding a coding unit 900 having a depth of 0 and a size of 2N_0x2N_0 may include partitions of a partition type 912 having a size of 2N_0x2N_0, a partition type 914 having a size of 2N_0xN_0, a partition type 916 having a size of N_0x2N_0, and a partition type 918 having a size of N_0xN_0. FIG. 9 only illustrates the partition types 912 through 918 which are obtained by symmetrically splitting the prediction unit 910, but a partition type is not limited thereto, and the partitions of the prediction unit 910 may include asymmetrical partitions, partitions having a predetermined shape, and partitions having a geometrical shape.

Prediction encoding is repeatedly performed on one partition having a size of 2N_0x2N_0, two partitions having a size of 2N_0xN_0, two partitions having a size of N_0x2N_0, and four partitions having a size of N_0xN_0, according to each partition type. The prediction encoding in an intra mode and an inter mode may be performed on the partitions having the sizes of 2N_0x2N_0, N_0x2N_0, 2N_0xN_0, and N_0xN_0. The prediction encoding in a skip mode is performed only on the partition having the size of 2N_0x2N_0.

If an encoding error is smallest in one of the partition types 912 through 916, the prediction unit 910 may not be split into a lower depth.

If the encoding error is the smallest in the partition type 918, a depth is changed from 0 to 1 to split the partition type 918 in operation 920, and encoding is repeatedly performed on coding units 930 having a depth of 2 and a size of N_0xN_0 to search for a minimum encoding error.

A prediction unit 940 for prediction encoding the coding unit 930 having a depth of 1 and a size of 2N_1x2N_1 (=N_0xN_0) may include partitions of a partition type 942 having a size of 2N_1x2N_1, a partition type 944 having a size of 2N_1xN_1, a partition type 946 having a size of N_1x2N_1, and a partition type 948 having a size of N_1xN_1.

If an encoding error is the smallest in the partition type 948, a depth is changed from 1 to 2 to split the partition type 948 in operation 950, and encoding is repeatedly performed on coding units 960, which have a depth of 2 and a size of N_2xN_2 to search for a minimum encoding error.

When a maximum depth is d, split operation according to each depth may be performed up to when a depth becomes d-1, and split information may be encoded as up to when a depth is one of 0 to d-2. In other words, when encoding is performed up to when the depth is d-1 after a coding unit corresponding to a depth of d-2 is split in operation 970, a prediction unit 990 for prediction encoding a coding unit 980 having a depth of d-1 and a size of 2N_(d-1)x2N_(d-1) may include partitions of a partition type 992 having a size of 2N_(d-1)x2N_(d-1), a partition type 994 having a size of 2N_(d-1)xN_(d-1), a partition type 996 having a size of N_(d-1)x2N_(d-1), and a partition type 998 having a size of N_(d-1)xN_(d-1).

Prediction encoding may be repeatedly performed on one partition having a size of 2N_(d-1)x2N_(d-1), two partitions having a size of 2N_(d-1)xN_(d-1), two partitions having a size of N_(d-1)x2N_(d-1), four partitions having a size of N_(d-1)xN_(d-1) from among the partition types 992 through 998 to search for a partition type having a minimum encoding error.

Even when the partition type 998 has the minimum encoding error, since a maximum depth is d, a coding unit CU_(d-1) having a depth of d-1 is no longer split to a lower depth, and a coded depth for the coding units constituting a current maximum coding unit 900 is determined to be d-1 and a partition type of the current maximum coding unit 900 may be determined to be N_(d-1)xN_(d-1). Also, since the maximum depth is d, split information for a coding unit 852 having a depth of 3-1 may not be set.

A data unit 999 may be a 'minimum unit' for the current maximum coding unit. A minimum unit according to an embodiment may be a square data unit obtained by splitting a minimum coding unit by 4. By performing the encoding repeatedly, the video encoding apparatus 100 according to an embodiment may select a depth having the least encoding error by comparing encoding errors according to depths of the coding unit 900 to determine a coded depth, and set a corresponding partition type and a prediction mode as an encoding mode of the coded depth.

As such, the minimum encoding errors according to depths are compared in all of the depths of 1 through d, and a depth having the least encoding error may be determined as a coded depth. The coded depth, the partition type of the prediction unit, and the prediction mode may be encoded and transmitted as information about an encoding mode. Also, since a coding unit is split from a depth of 0 to a coded depth, only split information of the coded depth is set to 0, and split information of depths excluding the coded depth is set to 1.

The data obtainer 220 of the video decoding apparatus 200 according to an embodiment may extract and use the information about the coded depth and the prediction unit of the coding unit 900 to decode the partition 912. The video decoding apparatus 200 according to an embodiment may determine a depth, in which split information is 0, as a coded depth by using split information according to depths, and use information about an encoding mode of the corresponding depth for decoding.

FIGS. 10 through 12 are diagrams for describing a relationship between coding units, prediction units, and transformation units, according to some embodiments.

A coding units 1010 are coding units having a tree structure, corresponding to coded depths determined by the video encoding apparatus 100 according to an embodiment, in a maximum coding unit. A prediction units 1060 are partitions of prediction units of each of the coding units 1010, and a transformation units 1070 are transformation units of each of the coding units 1010.

When a depth of a maximum coding unit is 0 in the coding units 1010, depths of coding units 1012 and 1054 are 1, depths of coding units 1014, 1016, 1018, 1028, 1050, and 1052 are 2, depths of coding units 1020, 1022, 1024, 1026, 1030, 1032, and 1048 are 3, and depths of coding units 1040, 1042, 1044, and 1046 are 4.

In the prediction units 1060, some encoding units 1014, 1016, 1022, 1032, 1048, 1050, 1052, and 1054 are obtained by splitting the coding units in the encoding units 1010. In other words, partition types in the coding units 1014, 1022, 1050, and 1054 have a size of 2NxN, partition types in the coding units 1016, 1048, and 1052 have a size of Nx2N, and a partition type of the coding unit 1032 has a size of NxN. Prediction units and partitions of the coding units 1010 are smaller than or equal to each coding unit.

Transformation or inverse transformation is performed on image data of the coding unit 1052 in the transformation units 1070 in a data unit that is smaller than the coding unit 1052. Also, the coding units 1014, 1016, 1022, 1032, 1048, 1050, and 1052 in the transformation units 1070 are different from those in the prediction units 1060 in terms of sizes and shapes. In other words, the video encoding and decoding apparatuses 100 and 200 according to embodiments may perform intra prediction, motion estimation, motion compensation, transformation, and inverse transformation individually on a data unit in the same coding unit.

Accordingly, encoding is recursively performed on each of coding units having a hierarchical structure in each region of a maximum coding unit to determine an optimum coding unit, and thus coding units having a recursive tree structure may be obtained. Encoding information may include split information about a coding unit, information about a partition type, information about a prediction mode, and information about a size of a transformation unit. Table 1 shows the encoding information that may be set by the video encoding and decoding apparatuses 100 and 200 according to embodiments.

Table 1

| Split Information 0 (Encoding on Coding Unit having Size of 2Nx2N and Current Depth of d) | | | | Split Information 1 |
|---|---|---|---|---|
| Prediction Mode | Partition Type | | Size of Transformation Unit | |
| Intra<br>Inter | Symmetrical Partition Type | Asymmetrical Partition Type | Split Information 0 of Transformation Unit | Split Information 1 of Transformation Unit | Repeatedly Encode Coding Units having Lower Depth of d+1 |
| Skip (Only 2Nx2N) | 2Nx2N<br><br>Nx2N<br><br>NxN | 2NxnU<br>2NxnD<br>nLx2N<br>nRx2N | 2Nx2N | NxN (Symmetrical Type)<br>N/2xN/2 (Asymmetrical Type) | |

The data stream generator 130 of the video encoding apparatus 100 according to an embodiment may output the encoding information about the coding units having a tree structure, and the data obtainer 220 of the video decoding apparatus 200 according to an embodiment may extract the encoding information about the coding units having a tree structure from a received bitstream.

Split information indicates whether a current coding unit is split into coding units of a lower depth. If split information of a current depth d is 0, a depth, in which a current coding unit is no longer split into a lower depth, is a coded depth, and thus information about a partition type, prediction mode, and a size of a transformation unit may be defined for the coded depth. If the current coding unit is further split according to the split information, encoding is independently performed on four split coding units of a lower depth.

A prediction mode may be one of an intra mode, an inter mode, and a skip mode. The intra mode and the inter mode may be defined in all partition types, and the skip mode is defined only in a partition type having a size of 2Nx2N.

The information about the partition type may indicate symmetrical partition types having sizes of 2Nx2N, 2NxN, Nx2N, and NxN, which are obtained by symmetrically splitting a height or a width of a prediction unit, and asymmetrical partition types having sizes of 2NxnU, 2NxnD, nLx2N, and nRx2N, which are obtained by asymmetrically splitting the height or width of the prediction unit. The asymmetrical partition types having the sizes of 2NxnU and 2NxnD may be respectively obtained by splitting the height of the prediction unit in 1:3 and 3:1, and the asymmetrical partition types having the sizes of nLx2N and nRx2N may be respectively obtained by splitting the width of the prediction unit in 1:3 and 3:1

The size of the transformation unit may be set to be two types in the intra mode and two types in the inter mode. In other words, if split information of the transformation unit is 0, the size of the transformation unit may be 2Nx2N, which is the size of the current coding unit. If split information of the transformation unit is 1, the transformation units may be obtained by splitting the current coding unit. Also, if a partition type of the current coding unit having the size of 2Nx2N is a symmetrical partition type, a size of a transformation unit may be NxN, and if the partition type of the current coding unit is an asymmetrical partition type, the size of the transformation unit may be N/2xN/2.

The encoding information about coding units having a tree structure according to an embodiment may include at least one selected from a coding unit corresponding to a coded depth, a prediction unit, and a minimum unit. The coding unit corresponding to the coded depth may include at least one selected from a prediction unit and a minimum unit containing the same encoding information.

Accordingly, it is determined whether adjacent data units are included in the same coding unit corresponding to the coded depth by comparing encoding information of the adjacent data units. Also, a corresponding coding unit corresponding to a coded depth is determined by using encoding information of a data unit, and thus a distribution of coded depths in a maximum coding unit may be determined.

Accordingly, if a current coding unit is predicted based on encoding information of adjacent data units, encoding information of data units in deeper coding units adjacent to the current coding unit may be directly referred to and used.

Alternatively, if a current coding unit is predicted based on encoding information of adjacent data units, data units adjacent to the current coding unit are searched using encoded information of the data units, and the searched adjacent coding units may be referred for predicting the current coding unit.

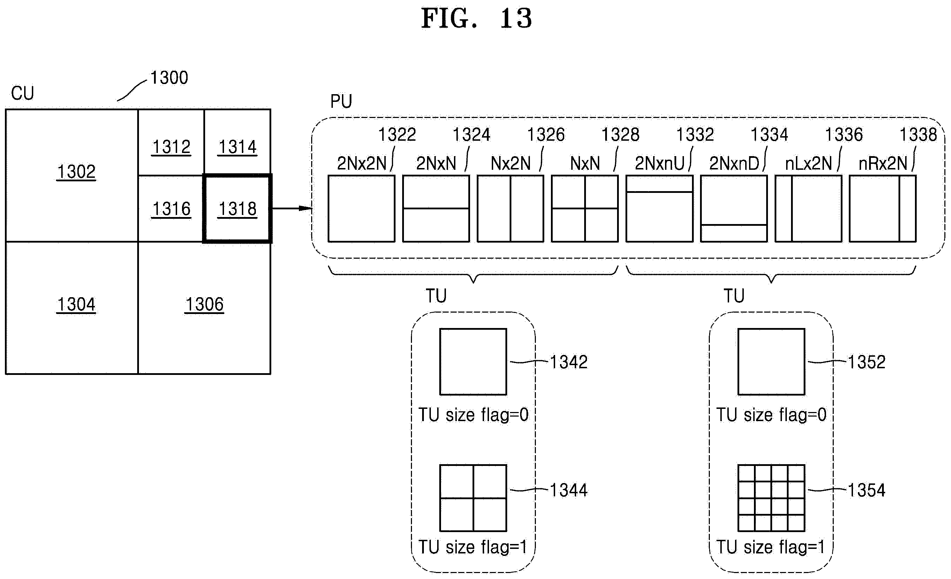

FIG. 13 is a diagram for describing a relationship between a coding unit, a prediction unit, and a transformation unit, according to encoding mode information of Table 1.

A maximum coding unit 1300 includes coding units 1302, 1304, 1306, 1312, 1314, 1316, and 1318 of coded depths. Here, since the coding unit 1318 is a coding unit of a coded depth, split information may be set to 0. Information about a partition type of the coding unit 1318 having a size of 2Nx2N may be set to be one of a partition type 1322 having a size of 2Nx2N, a partition type 1324 having a size of 2NxN, a partition type 1326 having a size of Nx2N, a partition type 1328 having a size of NxN, a partition type 1332 having a size of 2NxnU, a partition type 1334 having a size of 2NxnD, a partition type 1336 having a size of nLx2N, and a partition type 1338 having a size of nRx2N.

Split information (TU size flag) of a transformation unit is a type of a transformation index. The size of the transformation unit corresponding to the transformation index may be changed according to a prediction unit type or partition type of the coding unit.

For example, when the partition type is set to be symmetrical, i.e. the partition type 1322, 1324, 1326, or 1328, a transformation unit 1342 having a size of 2Nx2N is set if a TU size flag of a transformation unit is 0, and a transformation unit 1344 having a size of NxN is set if a TU size flag is 1.

When the partition type is set to be asymmetrical, i.e., the partition type 1332, 1334, 1336, or 1338, a transformation unit 1352 having a size of 2Nx2N is set if a TU size flag is 0, and a transformation unit 1354 having a size of N/2xN/2 is set if a TU size flag is 1.

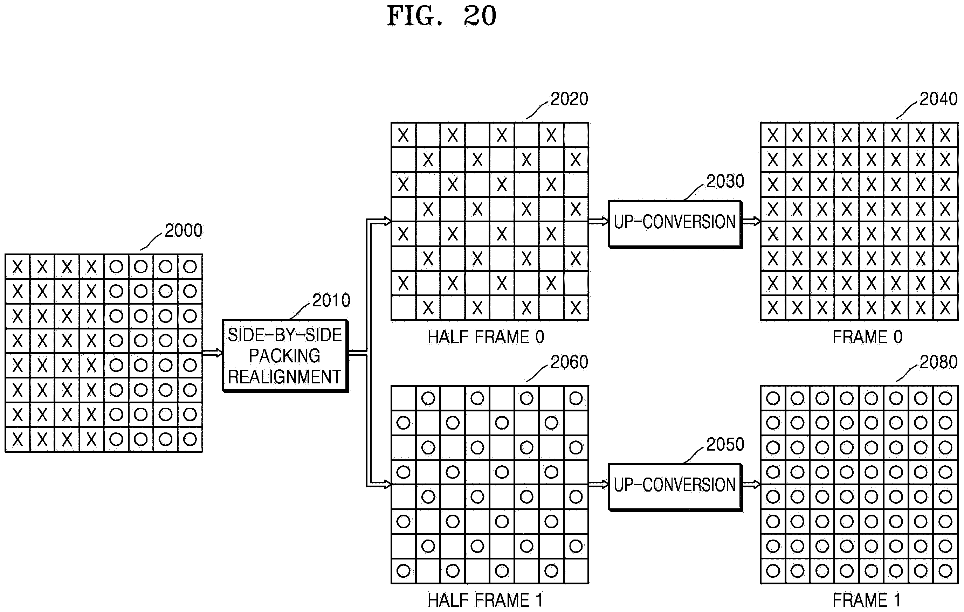

Referring to FIG. 20, the TU size flag is a flag having a value or 0 or 1, but the TU size flag is not limited to 1 bit, and a transformation unit may be hierarchically split having a tree structure while the TU size flag increases from 0. Split information (TU size flag) of a transformation unit may be an example of a transformation index.

In this case, the size of a transformation unit that has been actually used may be expressed by using a TU size flag of a transformation unit, according to an exemplary embodiment, together with a maximum size and minimum size of the transformation unit. The video encoding apparatus 100 is capable of encoding maximum transformation unit size information, minimum transformation unit size information, and a maximum TU size flag. The result of encoding the maximum transformation unit size information, the minimum transformation unit size information, and the maximum TU size flag may be inserted into an SPS. The video decoding apparatus 200 may decode video by using the maximum transformation unit size information, the minimum transformation unit size information, and the maximum TU size flag.

For example, (a) if the size of a current coding unit is 64x64 and a maximum transformation unit size is 32x32, (a-1) then the size of a transformation unit may be 32x32 when a TU size flag is 0, (a-2) may be 16x16 when the TU size flag is 1, and (a-3) may be 8x8 when the TU size flag is 2.

As another example, (b) if the size of the current coding unit is 32x32 and a minimum transformation unit size is 32x32, (b-1) then the size of the transformation unit may be 32x32 when the TU size flag is 0. Here, the TU size flag cannot be set to a value other than 0, since the size of the transformation unit cannot be less than 32x32.

As another example, (c) if the size of the current coding unit is 64x64 and a maximum TU size flag is 1, then the TU size flag may be 0 or 1. Here, the TU size flag cannot be set to a value other than 0 or 1.

Thus, if it is defined that the maximum TU size flag is 'MaxTransformSizeIndex', a minimum transformation unit size is 'MinTransformSize', and a transformation unit size is 'RootTuSize' when the TU size flag is 0, then a current minimum transformation unit size 'CurrMinTuSize' that can be determined in a current coding unit, may be defined by Equation (1):

$$\text{CurrMinTuSize}$$

$$= \max\left(\text{MinTransformSize}, \text{RootTuSize}/(2^{\wedge}\text{MaxTransformSizeIndex})\right) \dots (1)$$

Compared to the current minimum transformation unit size 'CurrMinTuSize' that can be determined in the current coding unit, a transformation unit size 'RootTuSize' when the TU size flag is 0 may denote a maximum transformation unit size that can be selected in the system. In Equation (1), 'RootTuSize/(2^MaxTransformSizeIndex)' denotes a transformation unit size when the transformation unit size 'RootTuSize', when the TU size flag is 0, is split a number of times corresponding to the maximum TU size flag, and 'MinTransformSize' denotes a minimum transformation size. Thus, a smaller value from among 'RootTuSize/(2^MaxTransformSizeIndex)' and 'MinTransformSize' may be the current minimum transformation unit size 'CurrMinTuSize' that can be determined in the current coding unit.

According to an exemplary embodiment, the maximum transformation unit size RootTuSize may vary according to the type of a prediction mode.

For example, if a current prediction mode is an inter mode, then 'RootTuSize' may be determined by using Equation (2) below. In Equation (2), 'MaxTransformSize' denotes a maximum transformation unit size, and 'PUSize' denotes a current prediction unit size.

$$RootTuSize = min(MaxTransformSize, PUSize) ......... (2)$$

That is, if the current prediction mode is the inter mode, the transformation unit size 'RootTuSize', when the TU size flag is 0, may be a smaller value from among the maximum transformation unit size and the current prediction unit size.

If a prediction mode of a current partition unit is an intra mode, 'RootTuSize' may be determined by using Equation (3) below. In Equation (3), 'PartitionSize' denotes the size of the current partition unit.

$$RootTuSize = min(MaxTransformSize, PartitionSize) ...........(3)$$

That is, if the current prediction mode is the intra mode, the transformation unit size 'RootTuSize' when the TU size flag is 0 may be a smaller value from among the maximum transformation unit size and the size of the current partition unit.

However, the current maximum transformation unit size 'RootTuSize' that varies according to the type of a prediction mode in a partition unit is just an example and exemplary embodiments are not limited thereto.

According to the video encoding method based on coding units having a tree structure as described with reference to FIGS. 1 through 13, image data of a spatial region is encoded for each coding unit of a tree structure. According to the video decoding method based on coding units having a tree structure, decoding is performed for each maximum coding unit to reconstruct image data of a spatial region. Thus, a picture and a video that is a picture sequence may be reconstructed. The reconstructed video may be reproduced by a reproducing apparatus, stored in a storage medium, or transmitted through a network.

Hereinafter, techniques for determining, by the video encoding apparatus 100 and the video decoding apparatus 200 based on coding units having a tree structure, information for a decoder configuration will be described with reference to FIGS. 14 through 24.

FIG. 14 is a flowchart of a video encoding method for a decoder configuration, according to various embodiments.

In operation 1410, the picture encoder 120 of the video encoding apparatus 100 may encode samples of an image.

Also, as described above with reference to FIGS. 1 through 13, the picture encoder 120 may perform encoding on samples of each coding unit based on coding units having a tree structure, according to maximum coding units included in each picture.

In operation 1420, the data stream generator 130 of the video encoding apparatus 100 may determine information about whether there is a constraint on a decoder configuration of the encoded image. Information about a decoder configuration of an image or information about whether there is a constrained decoder configuration may be determined such that a decoder decodes and reproduces an image.

For example, the decoder may require information about an arrangement method of the samples of the encoded picture. The decoder configuration may be determined to be progressive or interleaved based on whether the samples of the picture are arranged according to a progressive scan order or an interleaved scan order.

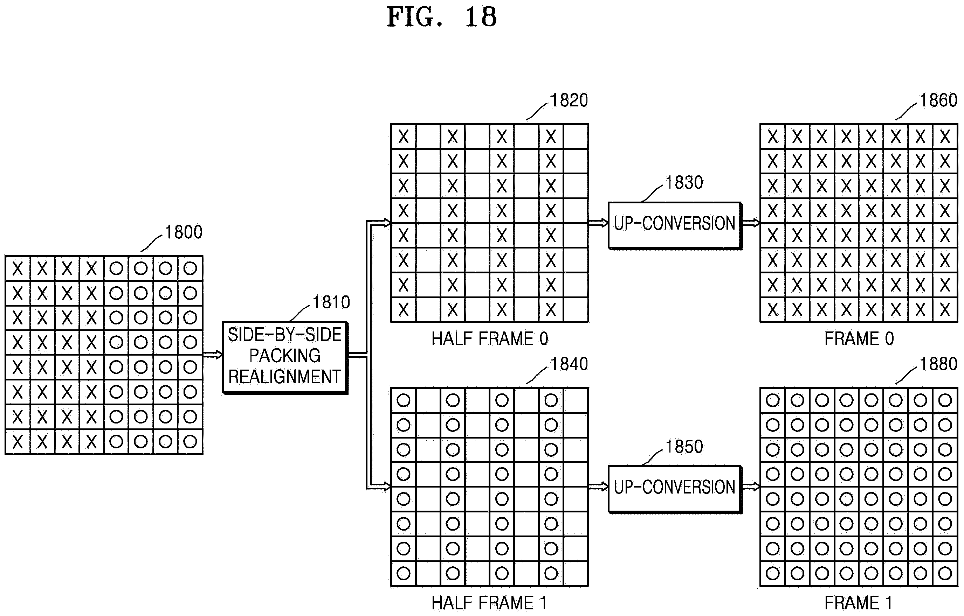

When two images are encoded instead of the same image sequences, encoding may be performed in a frame packing structure in which pixels of the two images are arranged on one image, or encoding may be performed by using different image sequences as individual layers. The frame packing structure will be described in detail later with reference to FIGS. 18 through 21.

An encoder may determine whether two types of images are encoded in one frame or one type of image is encoded in one frame based on whether a picture is encoded in a frame packing structure or in individual layers. The decoder needs to determine whether one type of image is decoded or two types of images are decoded from one frame. Thus, the decoder may require the information about whether samples are arranged in a frame packing structure.

Alternatively, frames including reconstructed samples may be sequentially reproduced without having to determine whether a picture is encoded in a field or frame form, as long as samples of the pictures are arranged in a frame form. Accordingly, the decoder may require information about whether samples are limitedly arranged in a frame structure.

Thus, in operation 1420, the data stream generator 130 may determine constraint information about an arrangement type of the samples of the encoded picture, as the information about whether there is a constraint on the decoder configuration of the encoded image.

According to some embodiments, the constraint information may include progressive scan information indicating whether reconstructed samples are arranged according to a progressive scan type.

According to some embodiments, the constraint information may include interlaced scan information indicating whether reconstructed samples are arranged according to an interlaced scan type.

According to some embodiments, the constraint information may include non-frame packing constraint information indicating whether reconstructed samples are arranged in an arrangement method other than a frame packing type.

According to some embodiments, the constraint information may include frame constraint information indicating whether samples of a picture are encoded only in frame units from among image and frame units.

In operation 1430, the data stream generator 130 may generate a data stream including network abstraction layer (NAL) units including the constraint information of the decoder configuration.

The constraint information according to an embodiment may be in maximum 48 bits, and may include the constraint information in a video parameter set raw byte sequence payload (RBSP) area from among the NAL units.

Also, the picture encoder 120 may encode the image per sub-region. Examples of a sub-region for parallel processing of video encoding and video decoding operations include a tile and a thread of wavefront parallel processing (WPP).

The data stream generator 130 may determine segmentation maximum size information indicating a limit on a maximum size of each sub-region in the picture.

A maximum value of the number of luma samples of a segmentation may be determined based on an integer of 12 bits, which is equal to or higher than 0 and is lower than 4096, indicated by the segmentation maximum size information according to an embodiment. Accordingly, the data stream generator 130 may determine the segmentation maximum size information to be an unsigned integer type having a fixed length, as the constraint information of the decoder configuration.

The data stream generator 130 according to an embodiment may insert the segmentation maximum size information, as a video usability information (VUI) parameter, into a sequence parameter set (SPS) from among the NAL units.

Accordingly, the video encoding apparatus 100 according to some embodiments may determine the constraint information about the decoder configuration such that the decoder appropriately classifies sub-regions of encoded picture data from a data stream and appropriately arranges reconstructed samples per picture. Also, the video encoding apparatus 100 may generate a data stream including at least one of the constraint information about the sample arrangement method and the segmentation maximum size information.

FIG. 15 is a flowchart of a video decoding method for a decoder configuration, according to various embodiments.

In operation 1510, the data obtainer 220 of the video decoding apparatus 200 may receive a data stream including NAL units.

The data obtainer 220 may obtain encoded data and encoding symbols from the data stream. The picture decoder 230 of the video decoding apparatus may reconstruct samples of a picture by performing decoding on the encoded data by using the encoding symbols.

As described above with reference to FIGS. 1 through 13, the picture decoder 230 may reconstruct samples by performing decoding on each coding unit, based on coding units having a tree structure according to maximum coding units included in each picture.

Also, in operation 1520, the data obtainer 220 may obtain information about whether there is a constraint on a decoder configuration of an encoded image, from the data stream. The data obtainer 220 may obtain, as constraint information, at least one of information about a decoder configuration of an image and information about whether there is a constrained decoder configuration, such that a decoder may decode and reproduce an image.

Constraint information about an arrangement method of samples of an encoded picture may be obtained as the information about whether there is a constraint on the decoder configuration of the encoded image.

According to some embodiments, the data obtainer 220 may obtain, as the constraint information, progressive scan information indicating whether reconstructed samples of a picture are arranged according to a progressive scan type, from the data stream.

According to some embodiments, the data obtainer 220 may obtain, as the constraint information, frame constraint information indicating whether samples of a picture are encoded only in frame units from among image and frame units, from the data stream.

According to some embodiments, the data obtainer 220 may obtain, as the constraint information, interlaced scan information indicating whether reconstructed samples are arranged according to an interlaced scan type, from the data stream.

According to some embodiments, the data obtainer 220 may obtain, as the constraint information, non-frame packing constraint information indicating whether reconstructed samples are arranged in an arrangement method other than a frame packing type, from the data stream.

In operation 1530, the picture decoder 230 of the video encoding apparatus 100 may reconstruct each picture by aligning the reconstructed samples according to an appropriate arrangement method.

The picture decoder 230 may determine an arrangement method of samples of a decoded picture from the constraint information. It is determined whether the decoder configuration is progressive or interleaved based on progressive scan information and interleaved scan information. Thus, it is determined whether samples of a picture are arranged in a progressive scan order or an interleaved scan order based on the progressive scan information and the interleaved scan information.

Accordingly, an image according to a progressive scan method may be reconstructed based on the progressive scan information. An image according to an interleaved scan method may be reconstructed based on the interleaved scan information.

According to another example, the picture decoder 230 may determine whether reconstructed picture samples have a non-frame packing structure based on the non-frame packing constraint information. For example, in a frame packing structure, pixels of two images having different properties may be reconstructed from one encoded picture. However, in a non-frame packing structure, pixels of a single image may be reconstructed from one frame. In other words, one image sequence may be reconstructed from a single layer.

According to another example, the picture decoder 230 may determine whether reconstructed samples are reconstructed only in frame units, based on the frame constraint information. When samples of a picture are arranged only in a form of frames, frames including reconstructed samples may be sequentially reconstructed without having to determine whether the picture is encoded in a form of fields or frames.

The data obtainer 220 according to an embodiment may obtain the constraint information from a video parameter set RBSP area from among the NAL units. The constraint information consisting of a total of 48 bits may be obtained.

Also, the data obtainer 220 may obtain segment maximum size information indicating a limit on a maximum size of each sub-region in a picture from the data stream. The data obtainer 220 according to an embodiment may obtain, as the constraint information of the decoder configuration, segmentation maximum size information being an unsigned integer type having a fixed length.

The picture decoder 230 according to an embodiment may determine a maximum value of the number of luma samples of a segmentation based on an integer of 12 bits, which is equal to or higher than 0 and lower than 4096, indicated by the segmentation maximum size information.

The picture decoder 230 may perform decoding by dividing an image into sub-regions based on a value indicated by the segmentation maximum size information. When the video decoding apparatus 200 includes a multi-core processor capable of simultaneous parallel processing, the picture decoder 230 may perform decoding operations on the sub-regions in parallel.

The data obtainer 220 according to an exemplary embodiment may obtain the segmentation maximum size information as a VUI parameter, from an SPS from among the NAL units.

Accordingly, the video decoding apparatus 200 according to some embodiments may obtain, as the constraint information about the decoder configuration, at least one of the constraint information about the sample arrangement method and the segmentation maximum size information. The video decoding apparatus 200 may perform decoding operations per sub-region in parallel by appropriately classifying sub-regions of encoded picture data from the data stream. Also, the video decoding apparatus 200 may appropriately arrange reconstructed samples per picture based on the constraint information about the sample arrangement method.

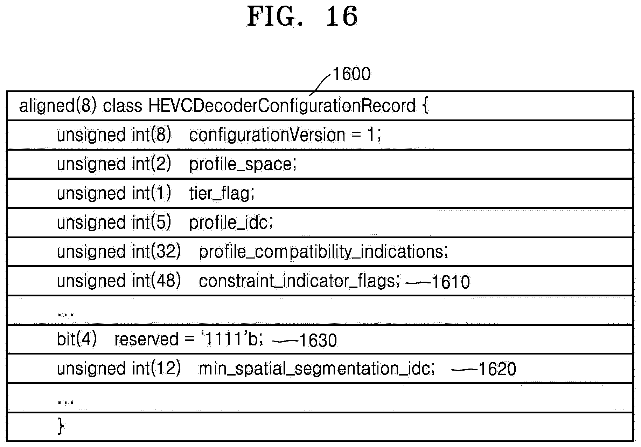

Hereinafter, syntaxes indicating decoder configuration information according to various embodiments are suggested with reference to FIGS. 16 through 23. The video encoding apparatus 100 may generate a data stream including parameters for a decoder configuration according to an order and bit number of at least one syntax shown in FIGS. 16, 17, and 22. The video decoding apparatus 200 may obtain and read parameters for a decoder configuration from a data stream, according to an order and bit number of at least one syntax shown in FIGS. 16, 17, and 22.

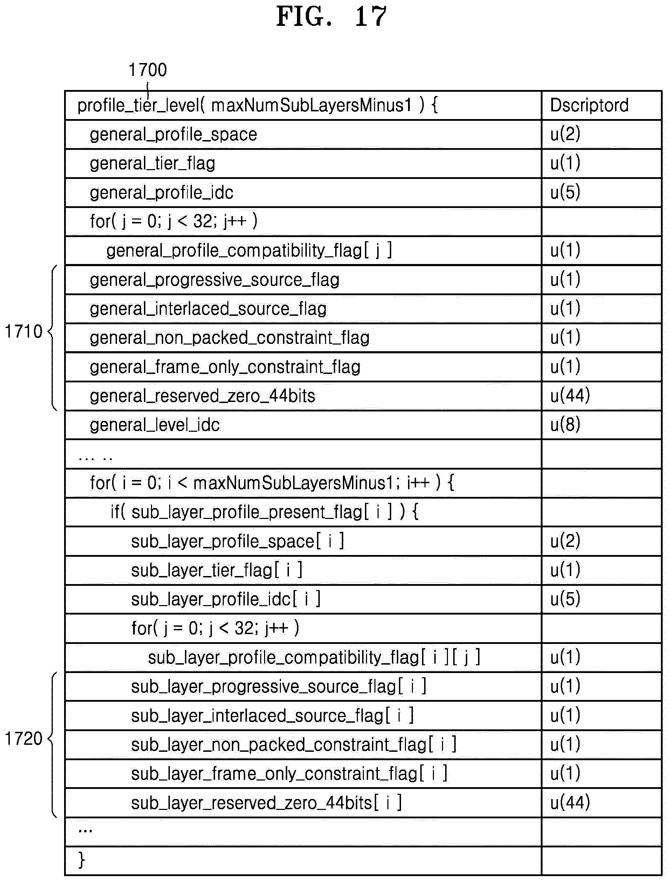

FIGS. 16 and 17 illustrate various embodiments of a syntax for a decoder configuration.

In FIG. 16, 'HEVCDecoderConfiguratoinRecord' 1600 may indicate decoder configuration information according to an embodiment. 'HEVCDecoderConfiguratoinRecord' 1600 may include, as decoder configuration information, a parameter 'constraint_indicator_flags' 1610 indicating constraint information and a parameter 'min_spatial_segmentation' 1620 indicating segmentation maximum size information.

The parameter 'constraint_indicator_flags' 1610 indicating constraint information according to an embodiment may be determined to consist of a total of 48 bits. Among the 48 bits, bits having a certain length may indicate constraint information about a picture sample arrangement method, and remaining bits may be used as reserved bits for setting a function that is expanded later.

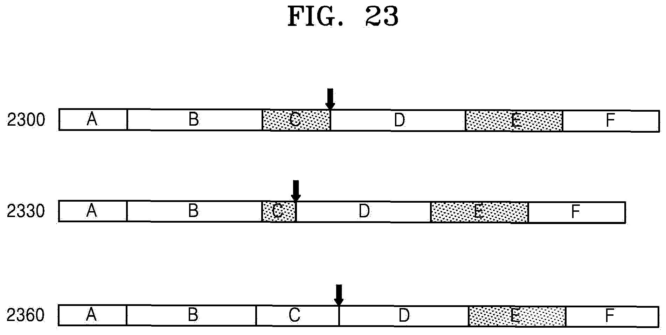

The parameter 'min_spatial_segmentation' 1620 indicating segmentation maximum size information according to an embodiment may be an integer equal to or higher than 0 and lower than 4095, and be determined to consist of 12 bits. However, since byte alignment is required such that a total length of the syntax of 'HEVCDecoderConfiguratoin-Record' 1600 is an N square number of 2, 4 bits 1630 may be added in front of the parameter 'min_spatial_segmentation' 1620 consisting of 12 bits, as will be described later with reference to FIG. 23.

FIG. 17 illustrates a high level syntax including constraint information about a sample arrangement method, according to another embodiment.

A video parameter set (VPS) RBSP syntax may include a profile-tier-level parameter 'profile_tier_level()' 1700 including configuration information about a profile, a tier, and a level.

The profile, the tier, and the level each specify various types of constraint information about a bitstream, and provide information about minimum functions and configurations required for a decoder to decode the bitstream. Generally, since the profile constrains algorithms required to analyze a syntax, only a decoder satisfying the profile decodes a bitstream.

The tier and the level may constrain values of parameters of each syntax. A constraint range of a parameter value may be determined per tier, such as tier 0 or tier 1, and a constraint range of a parameter value may be determined per level, such as level 0 or level 1.

Here, tier 0 may have a lower performance than tier 1. Several levels may be set for one tier. In the same tier, performance may be lower in a lower level than a higher level.

Constraint information 1710 about a sample arrangement method according to another embodiment may include a 1 bit parameter 'general_progressive_source_flag' indicating progressive scan information, 1 bit parameter 'general_interlaced_source_flag' indicating interlaced scan information, 1 bit parameter 'general_non_packed_constraint_flag' indicating non-frame packing constraint information, 1 bit parameter 'general_frame_only_constraint_flag' indicating frame constraint information, and 44 bit reserved bits 'general_reserved_zero_44bits'. As such, the constraint information 1710 consisting of a total of 48 bits may be determined.

Also, when a video in a plurality of layers is decoded, similar to the constraint information 1710 about the sample arrangement method for encoding and decoding of a general layer, constraint information 1720 about a sample arrangement method for encoding and decoding of a sub-layer may be included in the profile-tier-level parameter 'profile_tier_leverl()' 1700.

Accordingly, even for a video decoded in a sub-layer, the constraint information 1720 consisting of the total of 48 bits including a 1 bit parameter 'general_layerl_progressive_source_flag' indicating progressive scan information, 1 bit parameter 'sub_layer_interlaced_source_flag' indicating interlaced scan information, 1 bit parameter 'sub_layer_non_packed_constraint_flag' indicating non-frame packing constraint infomration, 1 bit parameter 'sub_layer_frame_only_constraint_flag' indicating frame constraint information, and 44 bit reserved bits 'sub_layer_reserved_zero_44bits' may be determined.

Accordingly, the video decoding apparatus 200 may obtain the constraint information about the sample arrangement method and the segmentation maximum size information from the decoder configuration information 'HEVCDecoderConfiguratoinRecord' 1600 or the profile-tier-level parameter 'profile_tier_level()' 1700, and determine an arrangement method of reconstructed samples and a limit on a maximum size of a segmentation.

As described above with reference to FIG. 17, the profile-tier-level parameter 'profile_tier_level()' 1700 according to an embodiment may include non-frame packing constraint information ('general_non_packed_constraint_flag' or 'sub_layer_non_packed_constraint_flag'). A frame packing type image structure will now be described with reference to FIGS. 18 through 21.

FIGS. 18 through 21 are diagrams for describing a reconstruction process of an image of various frame packing types.

Examples of a frame packing type may include a side-by-side type, a top-bottom type, and a temporal interleaving frame type. In FIGS. 18 through 21, operations of reconstructing each of reconstructed frames 1800 through 2100 decoded by the picture decoder 230 to two frames according to a frame packing type are described.

The two frames may be images having different properties. For example, a frame that is a frame packing type, which includes samples of a left-view frame and samples of a right-view frame, may be encoded, and when the frame that is the frame packing type is decoded, the left-view frame and the right-view frame may be separated from the reconstructed frame.

Here, each of the reconstructed frames 1800 through 2100 includes certain color component samples. In other words, the reconstructed frames 1800 through 2100 may be reconstructed frames of luma component samples or chroma component samples.

In FIG. 18, the reconstructed frame 1800 is a frame that is a side-by-side packing type. In the frame that is a side-by-side packing type, samples in the left half indicated by 'X' and samples in the right half indicated by 'O' belong to an original frame having different properties.

Accordingly, a half frame 0 1820 including the left half samples and a half frame 1 1840 including the right half samples may be separated from the reconstructed frame 1800 via a side-by-side packing realignment operation 1810.

Resolution of the reconstructed frame 1800 may be the same as an original resolution of the original frame. Resolution of each of the half frames 0 and 1 1820 and 1840 may be half of the original frame of the reconstructed frame 1800.

The half frame 0 1820 may be reconstructed to a frame 0 1860 having the same resolution as the reconstructed frame 1800 via an up-conversion operation 1830 in a horizontal pixel direction. The half frame 1 1840 may be reconstructed to a frame 1 1880 having the same resolution as the reconstructed frame 1800 via an up-conversion operation 1850 in the horizontal pixel direction. For the up-conversion operations 1830 and 1850, interpolation in the horizontal pixel direction may be performed.

Accordingly, the frame 0 1860 and the frame 1 1880 having the original resolution may be reconstructed from the reconstructed frame 1800 in the side-by-side packing type.

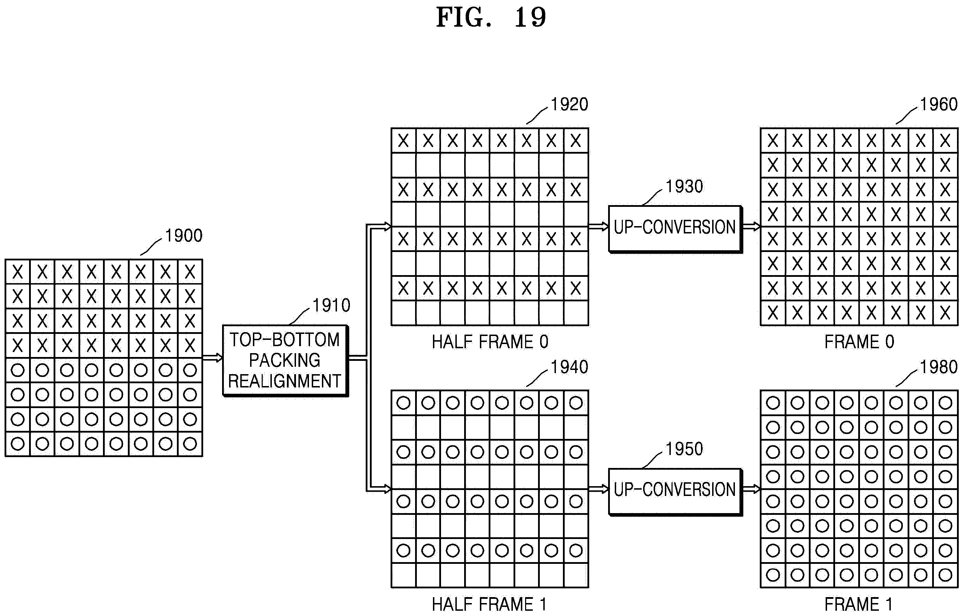

The reconstructed frame 1900 of FIG. 19 is a frame that is a top-bottom packing type. In the frame that is the top-bottom packing type, samples in the top half indicated by 'X' and samples in the bottom half indicated by 'O' belong to an original frame having different properties.

Accordingly, a half frame 0 1920 including the top half samples and a half frame 1 1940 including the bottom half samples may be separated from the reconstructed frame 1900 via a top-bottom packing realignment operation 1910.

The half frame 0 1920 and the half frame 1 1940 may be reconstructed to a frame 0 1960 and a frame 1 1980 having the same resolution as the reconstructed frame 1900 via up-conversion operations 1930 and 1950 in a vertical pixel direction, respectively. Accordingly, the frame 0 1960 and the frame 1 1980 having the original resolution may be reconstructed from the reconstructed frame 1900.

In FIG. 20, the reconstructed frame 2000 is a frame that is a side-by-side packing type. In the frame that is a side-by-side packing type, samples in the left half indicated by 'X' and samples in the right half indicated by 'O' belong to an original frame having different properties.

Accordingly, a half frame 0 2020 including the top half samples and a half frame 1 2040 including the bottom half samples may be separated from the reconstructed frame 2000 via a side-by-side packing realignment operation 2010.

In FIG. 18, pixels of the half frame 0 1820 and the half frame 1 1840, which are separated from the reconstructed frame 1800 that is the side-by-side packing type, are arranged in vertical rows. However, in FIG. 20, pixels of the half frame 0 2020 and the half frame 1 2040, which are separated from the reconstructed frame 2000 that is the side-by-side packing type, are arranged in checkerboard manners.

Accordingly, the half frame 0 2020 and the half frame 1 2040 may be reconstructed to a frame 0 2060 and a frame 1 2080 having the same resolution as the reconstructed frame 2000 via up-conversion operations 2030 and 2050 in a vertical/horizontal pixel direction, respectively. Accordingly, the frame 0 2060 and the frame 1 2080 having the original resolution may be reconstructed from the reconstructed frame 2000.

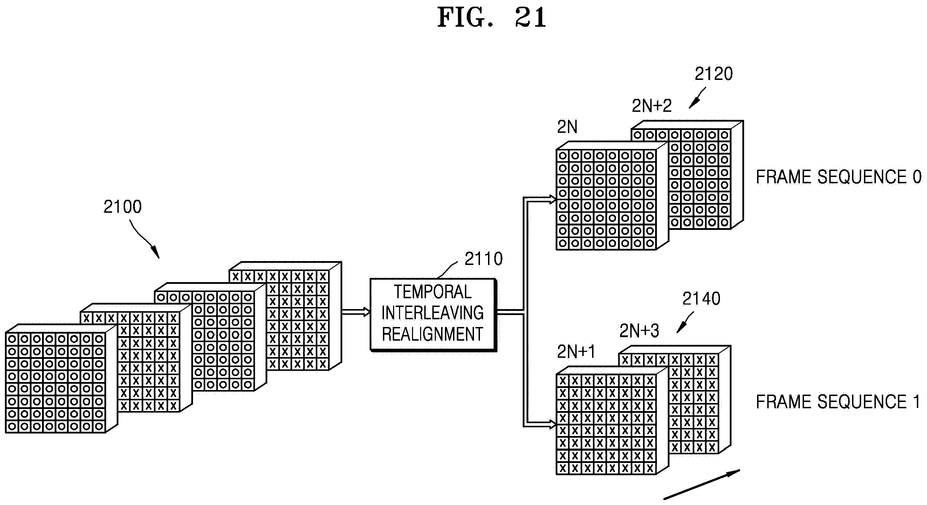

In FIG. 21, the reconstructed frames 2100 are frames that are a temporal interleaving frame type. In a frame sequence of a temporal interleaving frame type, even-th frames and odd-th frames belong to an original frame sequence having different properties.

Accordingly, a frame sequence 0 2010 including even-th frames indicated by 'O' and a frame sequence 2140 including odd-th frames indicated by 'X' may be reconstructed from the reconstructed frame 2100 via a temporal interleaving frame realignment operation 2110.

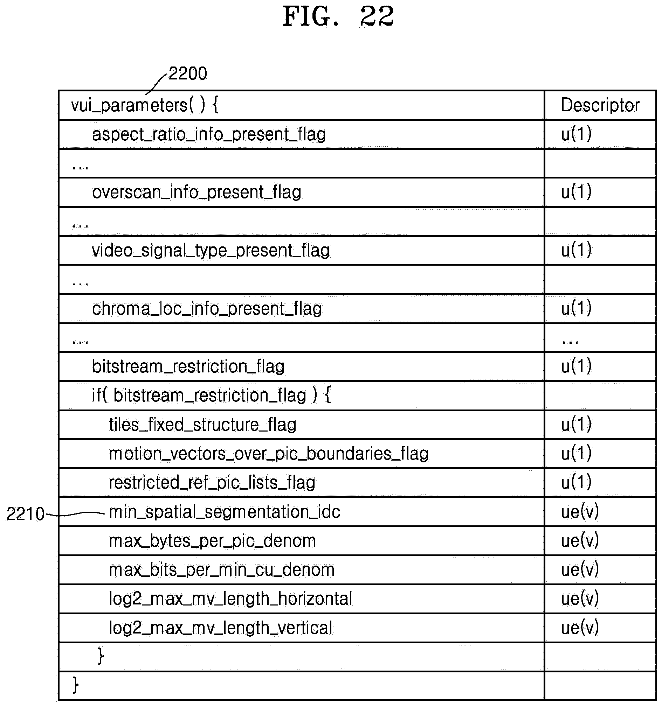

In FIG. 16, an embodiment of inserting the parameter 'min_spatial_segmentation' 1620 consisting of 12 bits indicating the segmentation maximum size information and the 4 bits 1630 for byte alignment to the 'HEVCDecoder-ConfiguratoinRecord' 1600 including the decoder configuration information has been suggested. Hereinafter, syntaxes of the segmentation maximum size information according to other embodiments will be described with reference to FIGS. 22 and 23.

FIG. 22 illustrates another embodiment of a syntax for a decoder configuration.

Decoder configuration information according to another embodiment may be contained in a VUI parameter 2200. Also, the VUI parameter 2200 may be contained in an SPS RBSP area from among NAL units.

The VUI parameter 2200 may include various types of information to increase usability of a video. For example, the VUI parameter 2200 may include a parameter indicating whether information about an aspect ratio is included, a parameter indicating whether information about overscanning is included, a parameter indicating whether information about a video signal type is included, a parameter indicating whether information about a location of a chroma component compared to a luma component is included, and a parameter indicating whether constraint information about a bitstream structure is included.

When the VUI parameter 2200 includes the constraint information about the bitstream structure, the VUI parameter 2200 may further include a parameter 'min_spatial_segmentation_idc' 2210 indicating segmentation maximum size information.

As described above, a parameter indicating segmentation maximum size information, according to an embodiment, is determined to a fixed length. Matters to be considered in configuring a syntax to a fixed length parameter will now be described with reference to FIG. 23.

FIG. 23 is a diagram for describing a byte alignment method of a variable length syntax and a fixed length syntax.

As described above, the parameter 'min_spatial_segmentation' 1620 and the parameter 'min_spatial_segmentation_idc' 2210 may each have a value consisting of 12 bits that is equal to or higher than 0 and lower than 4095.

In a first data stream 2300, a second data stream 2330, and a third data stream 2360, A through E each indicate a parameter forming a syntax of a data stream.

Here, parameters in dark colors including C parameters 2310 and 2340 of the first data stream 2300 and the second data stream 2330 are variable length parameters. The remaining parameters are all fixed length parameters. Here, a length denotes the number of bits.

Since the C parameters 2310 and 2340 have variable lengths in the first and second data streams 2300 and 2330, the video decoding apparatus 200 may perform an additional operation of analyzing variable length codes of the C parameters 2310 and 2340 in order to obtain D parameters.

However, when a C parameter 2370 has a fixed length as in the third data stream 2360, the video decoding apparatus 200 may easily access the D parameter after the C parameter without having to analyze a variable length code.

Also, in order for a syntax to be defined in 8 bits, i.e., in byte units, a total bit length of the syntax may be determined to be a multiple of 8. Thus, as described above, when the parameter 'min_spatial_segmentation' 1620 and the parameter 'min_spatial_segmentation_idc' 2210 each have a value in 12 bits that is equal to or higher than 0 and lower than 4095, the total number of bits of the syntax of the decoder configuration information 1600 or the VUI parameter 2200 may not be a multiple of 8 bits.

Accordingly, the video encoding apparatus 100 according to an embodiment may add dummy data of 4 bits to the segmentation maximum size information of 12 bits. Accordingly, the video decoding apparatus 200 may extract the segmentation maximum size information from the decoder configuration information 1600 or the VUI parameter 220 defined in a length of a multiple of 8 bits, and obtain a value indicating a limit on a maximum size of an actual segmentation excluding the dummy data from the segmentation maximum size information.

Accordingly, at least one of the constraint information about the sample arrangement method and the segmentation maximum size information may be determined as the constraint information about the decoder configuration described above with reference to FIGS. 14 through 23. The video decoding apparatus 200 may appropriately classify sub-regions of encoded picture data from a data stream, and perform decoding operations per sub-region in parallel, based on the segmentation maximum size information. Also, the video decoding apparatus 200 may appropriately arrange reconstructed samples per picture/frame based on the constraint information about the sample arrangement method.

Hereinafter, various embodiments to which the video encoding method and the video decoding method described above are applicable are suggested with reference to FIGS. 24 through 30.

For convenience of description, the video encoding method described above with reference to FIGS. 1 through 23 will be collectively referred to as a 'video encoding method'. In addition, the video decoding method described above with reference to FIGS. 1 through 23 will be referred to as a 'video decoding method'.

Also, the video encoding apparatus 100 described above with reference to FIGS. 1 through 23 or a video encoding apparatus including the image encoder 400 will be collectively referred to as a 'video encoding apparatus. In addition, the video decoding apparatus 200 described above with reference to FIGS. 1 through 23 or a video decoding apparatus including the image decoder 500 will be collectively referred to as a 'video decoding apparatus'.

A computer-readable recording medium storing a program, e.g., a disc 26000, according to an embodiment will now be described in detail.

FIG. 24 is a diagram of a physical structure of the disc 26000 in which a program is stored, according to some embodiments. The disc 26000, which is a storage medium, may be a hard drive, a compact disc-read only memory (CD-ROM) disc, a Blu-ray disc, or a digital versatile disc (DVD). The disc 26000 includes a plurality of concentric tracks Tr that are each divided into a specific number of sectors Se in a circumferential direction of the disc 26000. In a specific region of the disc 26000, a program that executes the quantization parameter determining method, the video encoding method, and the video decoding method described above may be assigned and stored.

A computer system embodied using a storage medium that stores a program for executing the video encoding method and the video decoding method as described above will now be described with reference to FIG. 22.

FIG. 25 is a diagram of a disc drive 26800 for recording and reading a program by using the disc 26000. A computer system 27000 may store a program that executes at least one selected from a video encoding method and a video decoding method according to an exemplary embodiment, in the disc 26000 via the disc drive 26800. To run the program stored in the disc 26000 in the computer system 27000, the program may be read from the disc 26000 and be transmitted to the computer system 26700 by using the disc drive 27000.

The program that executes at least one selected from a video encoding method and a video decoding method according to an exemplary embodiment may be stored not only in the disc 26000 illustrated in FIG. 24 or 25 but also in a memory card, a ROM cassette, or a solid state drive (SSD).

A system to which the video encoding method and a video decoding method described above are applied will be described below.

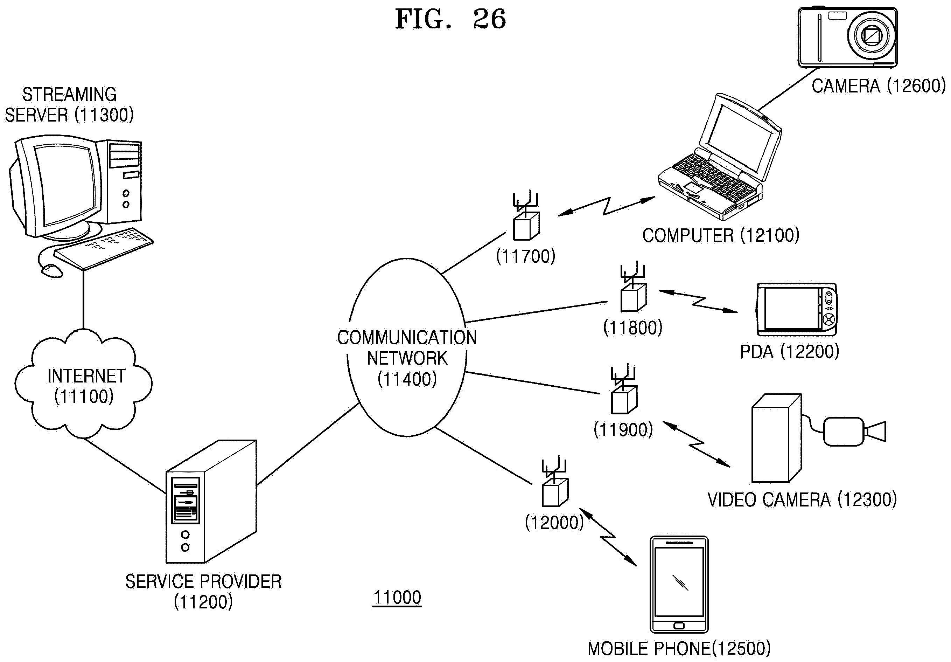

FIG. 26 is a diagram of an overall structure of a content supply system 11000 for providing a content distribution service. A service area of a communication system is divided into predetermined-sized cells, and wireless base stations 11700, 11800, 11900, and 12000 are installed in these cells, respectively.

The content supply system 11000 includes a plurality of independent devices. For example, the plurality of independent devices, such as a computer 12100, a personal digital assistant (PDA) 12200, a video camera 12300, and a mobile phone 12500, are connected to the Internet 11100 via an internet service provider 11200, a communication network 11400, and the wireless base stations 11700, 11800, 11900, and 12000.

However, the content supply system 11000 is not limited to as illustrated in FIG. 26, and devices may be selectively connected thereto. The plurality of independent devices may be directly connected to the communication network 11400, not via the wireless base stations 11700, 11800, 11900, and 12000.

The video camera 12300 is an imaging device, e.g., a digital video camera, which is capable of capturing video images. The mobile phone 12500 may employ at least one communication method from among various protocols, e.g., Personal Digital Communications (PDC), Code Division Multiple Access (CDMA), Wideband-Code Division Multiple Access (W-CDMA), Global System for Mobile Communications (GSM), and Personal Handyphone System (PHS).

The video camera 12300 may be connected to a streaming server 11300 via the wireless base station 11900 and the communication network 11400. The streaming server 11300 allows content received from a user via the video camera 12300 to be streamed via a real-time broadcast. The content received from the video camera 12300 may be encoded using the video camera 12300 or the streaming server 11300. Video data captured by the video camera 12300 may be transmitted to the streaming server 11300 via the computer 12100.

Video data captured by a camera 12600 may also be transmitted to the streaming server 11300 via the computer 12100. The camera 12600 is an imaging device capable of capturing both still images and video images, similar to a digital camera. The video data captured by the camera 12600 may be encoded using the camera 12600 or the computer 12100. Software that performs encoding and decoding video may be stored in a computer-readable recording medium, e.g., a CD-ROM disc, a floppy disc, a hard disc drive, an SSD, or a memory card, which may be accessible by the computer 12100.

If video data is captured by a camera built in the mobile phone 12500, the video data may be received from the mobile phone 12500.

The video data may also be encoded by a large scale integrated circuit (LSI) system installed in the video camera 12300, the mobile phone 12500, or the camera 12600.

The content supply system 11000 may encode content data recorded by a user using the video camera 12300, the camera 12600, the mobile phone 12500, or another imaging device, e.g., content recorded during a concert, and transmit the encoded content data to the streaming server 11300. The streaming server 11300 may transmit the encoded content data in a type of a streaming content to other clients that request the content data.

The clients are devices capable of decoding the encoded content data, e.g., the computer 12100, the PDA 12200, the video camera 12300, or the mobile phone 12500. Thus, the content supply system 11000 allows the clients to receive and reproduce the encoded content data. Also, the content supply system 11000 allows the clients to receive the encoded content data and decode and reproduce the encoded content data in real time, thereby enabling personal broadcasting.

Encoding and decoding operations of the plurality of independent devices included in the content supply system 11000 may be similar to those of a video encoding apparatus and a video decoding apparatus according to an exemplary embodiment.

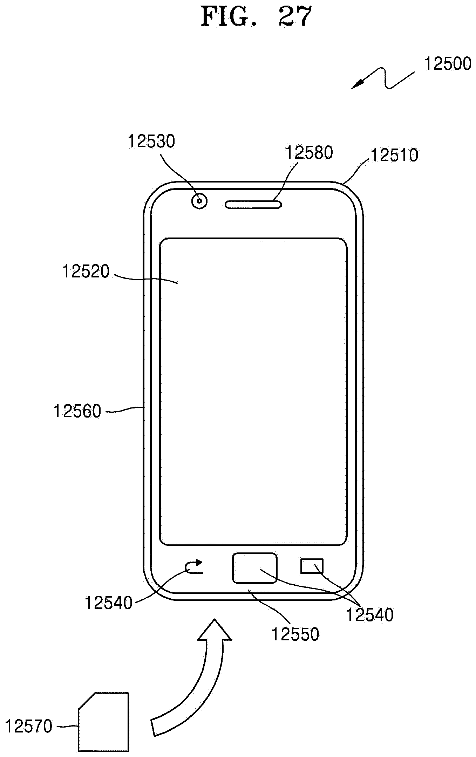

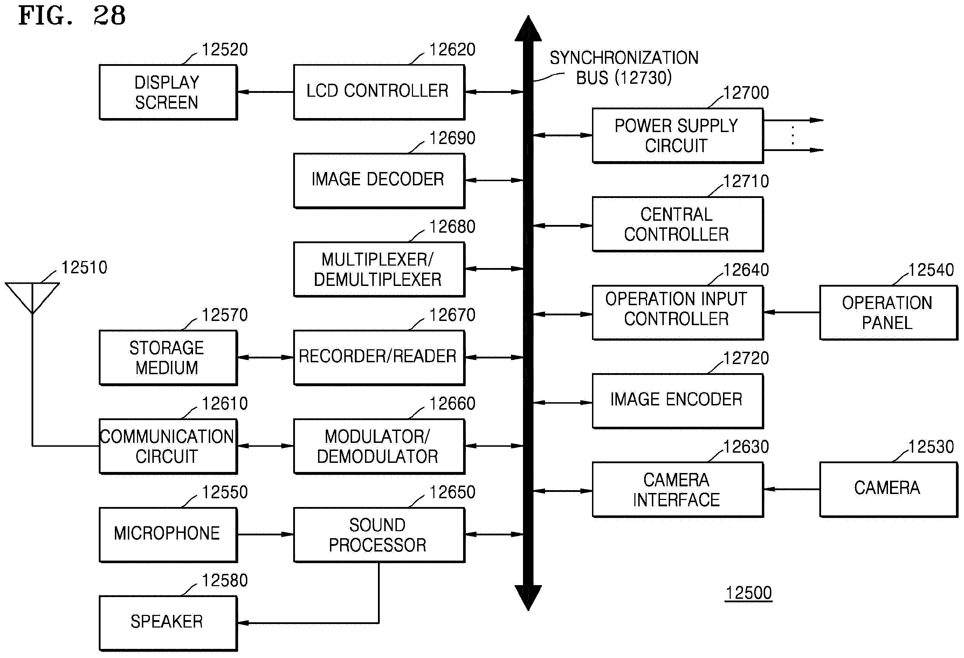

The mobile phone 12500 included in the content supply system 11000 according to an exemplary embodiment will now be described in greater detail with referring to FIGS. 27 and 28.

FIG. 27 illustrates an external structure of the mobile phone 12500 to which a video encoding method and a video decoding method are applied, according to some embodiments. The mobile phone 12500 may be a smart phone, the functions of which are not limited and a large number of the functions of which may be changed or expanded.

The mobile phone 12500 includes an internal antenna 12510 via which a radio-frequency (RF) signal may be exchanged with the wireless base station 12000 of FIG. 21, and includes a display screen 12520 for displaying images captured by a camera 12530 or images that are received via the antenna 12510 and decoded, e.g., a liquid crystal display (LCD) or an organic light-emitting diode (OLED) screen. The mobile phone 12500 includes an operation panel 12540 including a control button and a touch panel. If the display screen 12520 is a touch screen, the operation panel 12540 further includes a touch sensing panel of the display screen 12520. The mobile phone 12500 includes a speaker 12580 for outputting voice and sound or another type of sound output unit, and a microphone 12550 for inputting voice and sound or another type sound input unit. The mobile phone 12500 further includes the camera 12530, such as a charge-coupled device (CCD) camera, to capture video and still images. The mobile phone 12500 may further include a storage medium 12570 for storing encoded/decoded data, e.g., video or still images captured by the camera 12530, received via email, or obtained according to various ways; and a slot 12560 via which the storage medium 12570 is loaded into the mobile phone 12500. The storage medium 12570 may be a flash memory, e.g., a secure digital (SD) card or an electrically erasable and programmable read only memory (EEPROM) included in a plastic case.

FIG. 28 illustrates an internal structure of the mobile phone 12500. To systemically control parts of the mobile phone 12500 including the display screen 12520 and the operation panel 12540, a power supply circuit 12700, an operation input controller 12640, an image encoding unit 12720, a camera interface 12630, an LCD controller 12620, an image decoding unit 12690, a multiplexer/demultiplexer 12680, a recording/reading unit 12670, a modulation/demodulation unit 12660, and a sound processor 12650 are connected to a central controller 12710 via a synchronization bus 12730.

If a user operates a power button and sets from a 'power off' state to a power on' state, the power supply circuit 12700 supplies power to all the parts of the mobile phone 12500 from a battery pack, thereby setting the mobile phone 12500 in an operation mode.

The central controller 12710 includes a CPU, a ROM, and a RAM.

While the mobile phone 12500 transmits communication data to the outside, a digital signal is generated by the mobile phone 12500 under control of the central controller 12710. For example, the sound processor 12650 may generate a digital sound signal, the image encoding unit 12720 may generate a digital image signal, and text data of a message may be generated via the operation panel 12540 and the operation input controller 12640. When a digital signal is transmitted to the modulation/demodulation unit 12660 under control of the central controller 12710, the modulation/demodulation unit 12660 modulates a frequency band of the digital signal, and a communication circuit 12610 performs digital-to-analog conversion (DAC) and frequency conversion on the frequency band-modulated digital sound signal. A transmission signal output from the communication circuit 12610 may be transmitted to a voice communication base station or the wireless base station 12000 via the antenna 12510.

For example, when the mobile phone 12500 is in a conversation mode, a sound signal obtained via the microphone 12550 is transformed into a digital sound signal by the sound processor 12650, under control of the central controller 12710. The digital sound signal may be transformed into a transformation signal via the modulation/demodulation unit 12660 and the communication circuit 12610, and may be transmitted via the antenna 12510.

When a text message, e.g., email, is transmitted in a data communication mode, text data of the text message is input via the operation panel 12540 and is transmitted to the central controller 12610 via the operation input controller 12640. Under control of the central controller 12610, the text data is transformed into a transmission signal via the modulation/demodulation unit 12660 and the communication circuit 12610 and is transmitted to the wireless base station 12000 via the antenna 12510.

To transmit image data in the data communication mode, image data captured by the camera 12530 is provided to the image encoding unit 12720 via the camera interface 12630. The captured image data may be directly displayed on the display screen 12520 via the camera interface 12630 and the LCD controller 12620.

A structure of the image encoding unit 12720 may correspond to that of the video encoding apparatus 100 described above. The image encoding unit 12720 may transform the image data received from the camera 12530 into compressed and encoded image data according to the video encoding method described above, and then output the encoded image data to the multiplexer/demultiplexer 12680. During a recording operation of the camera 12530, a sound signal obtained by the microphone 12550 of the mobile phone 12500 may be transformed into digital sound data via the sound processor 12650, and the digital sound data may be transmitted to the multiplexer/demultiplexer 12680.

The multiplexer/demultiplexer 12680 multiplexes the encoded image data received from the image encoding unit 12720, together with the sound data received from the sound processor 12650. A result of multiplexing the data may be transformed into a transmission signal via the modulation/demodulation unit 12660 and the communication circuit 12610, and may then be transmitted via the antenna 12510.

While the mobile phone 12500 receives communication data from the outside, frequency recovery and ADC are performed on a signal received via the antenna 12510 to transform the signal into a digital signal. The modulation/demodulation unit 12660 modulates a frequency band of the digital signal. The frequency-band modulated digital signal is transmitted to the video decoding unit 12690, the sound processor 12650, or the LCD controller 12620, according to the type of the digital signal.

In the conversation mode, the mobile phone 12500 amplifies a signal received via the antenna 12510, and obtains a digital sound signal by performing frequency conversion and ADC on the amplified signal. A received digital sound signal is transformed into an analog sound signal via the modulation/demodulation unit 12660 and the sound processor 12650, and the analog sound signal is output via the speaker 12580, under control of the central controller 12710.

When in the data communication mode, data of a video file accessed at an Internet website is received, a signal received from the wireless base station 12000 via the antenna 12510 is output as multiplexed data via the modulation/demodulation unit 12660, and the multiplexed data is transmitted to the multiplexer/demultiplexer 12680.

To decode the multiplexed data received via the antenna 12510, the multiplexer/demultiplexer 12680 demultiplexes the multiplexed data into an encoded video data stream and an encoded audio data stream. Via the synchronization bus 12730, the encoded video data stream and the encoded audio data stream are provided to the video decoding unit 12690 and the sound processor 12650, respectively.

A structure of the image decoding unit 12690 may correspond to that of the video decoding apparatus 200 described above. The image decoding unit 12690 may decode the encoded video data to obtain reconstructed video data and provide the reconstructed video data to the display screen 12520 via the LCD controller 12620, according to the video decoding method described above.

Thus, the data of the video file accessed at the Internet website may be displayed on the display screen 12520. At the same time, the sound processor 12650 may transform audio data into an analog sound signal, and provide the analog sound signal to the speaker 12580. Thus, audio data contained in the video file accessed at the Internet website may also be reproduced via the speaker 12580.

The mobile phone 12500 or another type of communication terminal may be a transceiving terminal including both a video encoding apparatus and a video decoding apparatus according to some embodiments, may be a transceiving terminal including only the video encoding apparatus according to some embodiments, or may be a transceiving terminal including only the video decoding apparatus according to some embodiments.

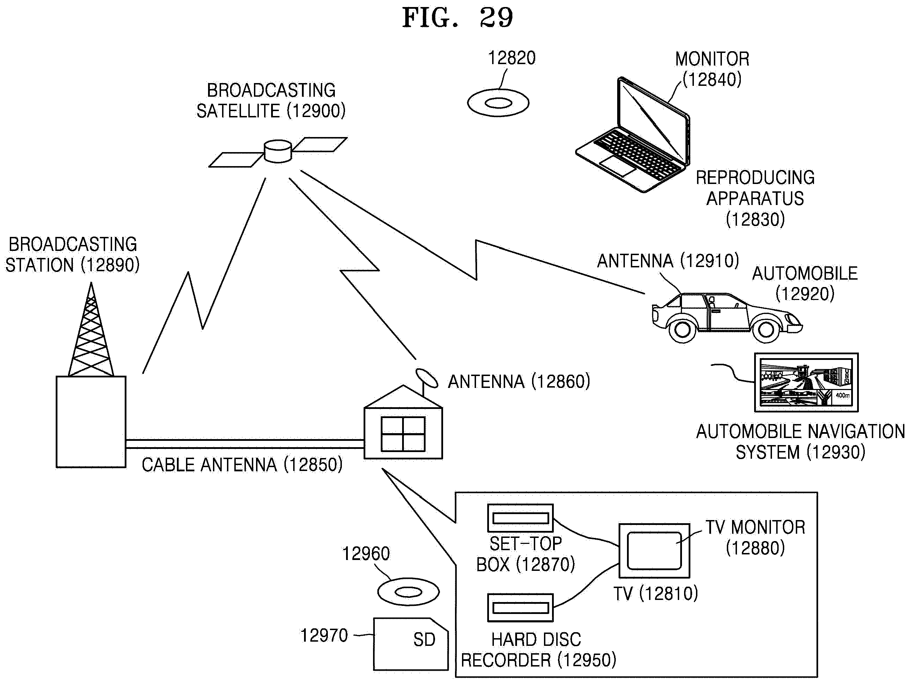

A communication system is not limited to the communication system described above with reference to FIG. 24. For example, FIG. 29 illustrates a digital broadcasting system employing a communication system, according to some embodiments. The digital broadcasting system of FIG. 29 may receive a digital broadcast transmitted via a satellite or a terrestrial network by using a video encoding apparatus and a video decoding apparatus according to some embodiments.

Specifically, a broadcasting station 12890 transmits a video data stream to a communication satellite or a broadcasting satellite 12900 by using radio waves. The broadcasting satellite 12900 transmits a broadcast signal, and the broadcast signal is transmitted to a satellite broadcast receiver via a household antenna 12860. In every house, an encoded video stream may be decoded and reproduced by a TV receiver 12810, a set-top box 12870, or another device.

When a video decoding apparatus according to some embodiments is implemented in a reproducing apparatus 12830, the reproducing apparatus 12830 may parse and decode an encoded video stream recorded on a storage medium 12820, such as a disc or a memory card to restore digital signals. Thus, the restored video signal may be reproduced, for example, on a monitor 12840.

In the set-top box 12870 connected to the antenna 12860 for a satellite/terrestrial broadcast or a cable antenna 12850 for receiving a cable television (TV) broadcast, a video decoding apparatus according to some embodiments may be installed. Data output from the set-top box 12870 may also be reproduced on a TV monitor 12880.

As another example, a video decoding apparatus according to some embodiments may be installed in the TV receiver 12810 instead of the set-top box 12870.

An automobile 12920 that has an appropriate antenna 12910 may receive a signal transmitted from the satellite 12900 or the wireless base station 11700. A decoded video may be reproduced on a display screen of an automobile navigation system 12930 installed in the automobile 12920.

A video signal may be encoded by a video encoding apparatus according to some embodiments and may then be stored in a storage medium. Specifically, an image signal may be stored in a DVD disc 12960 by a DVD recorder or may be stored in a hard disc by a hard disc recorder 12950. As another example, the video signal may be stored in an SD card 12970. If the hard disc recorder 12950 includes a video decoding apparatus according to an embodiment, a video signal recorded on the DVD disc 12960, the SD card 12970, or another storage medium may be reproduced on the TV monitor 12880.

The automobile navigation system 12930 may not include the camera 12530, the camera interface 12630, and the image encoding unit 12720 of FIG. 26. For example, the computer 12100 and the TV receiver 12810 may not be included in the camera 12530, the camera interface 12630, and the image encoding unit 12720 of FIG. 26.

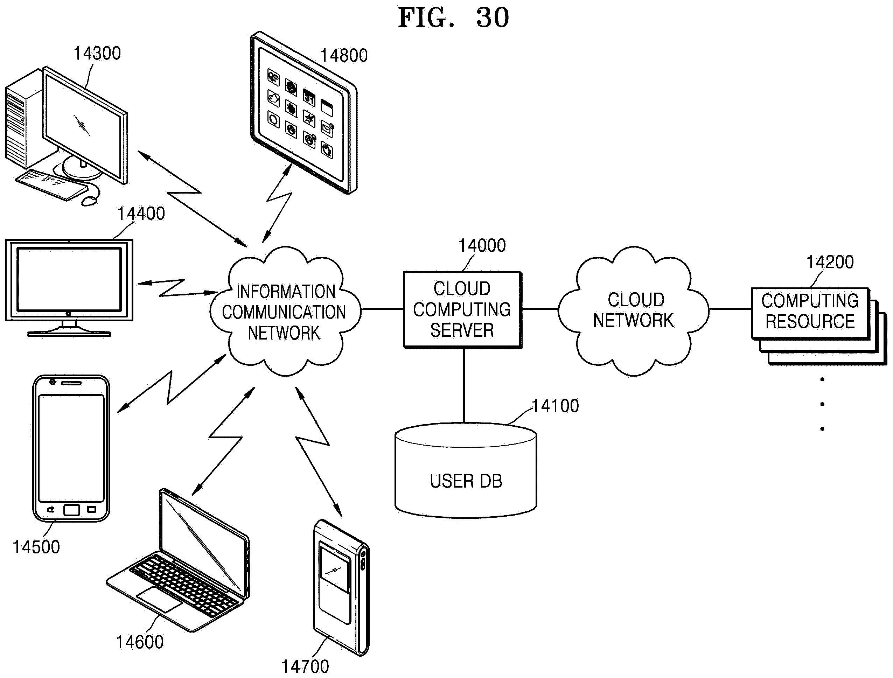

FIG. 30 is a diagram illustrating a network structure of a cloud computing system using a video encoding apparatus and a video decoding apparatus, according to some embodiments.

The cloud computing system according to some embodiments may include a cloud computing server 14000, a user database (DB) 14100, a plurality of computing resources 14200, and a user terminal.

The cloud computing system provides an on-demand outsourcing service of the plurality of computing resources 14200 via a data communication network, e.g., the Internet, in response to a request from the user terminal. Under a cloud computing environment, a service provider provides users with desired services by combining computing resources at data centers located at physically different locations by using virtualization technology. A service user does not have to install computing resources, e.g., an application, a storage, an operating system (OS), and security, into his/her own terminal in order to use them, but may select and use desired services from among services in a virtual space generated through the virtualization technology, at a desired point in time.

A user terminal of a specified service user is connected to the cloud computing server 14000 via a data communication network including the Internet and a mobile telecommunication network. User terminals may be provided cloud computing services, and particularly video reproduction services, from the cloud computing server 14000. The user terminals may be various types of electronic devices capable of being connected to the Internet, e.g., a desktop PC 14300, a smart TV 14400, a smart phone 14500, a notebook computer 14600, a portable multimedia player (PMP) 14700, a tablet PC 14800, and the like.

The cloud computing server 14000 may combine the plurality of computing resources 14200 distributed in a cloud network and provide user terminals with a result of combining. The plurality of computing resources 14200 may include various data services, and may include data uploaded from user terminals. As described above, the cloud computing server 14000 may provide user terminals with desired services by combining video database distributed in different regions according to the virtualization technology.

User information about users who have subscribed for a cloud computing service is stored in the user DB 14100. The user information may include logging information, addresses, names, and personal credit information of the users. The user information may further include indexes of videos. Here, the indexes may include a list of videos that have already been reproduced, a list of videos that are being reproduced, a pausing point of a video that was being reproduced, and the like.

Information about a video stored in the user DB 14100 may be shared between user devices. For example, when a video service is provided to the notebook computer 14600 in response to a request from the notebook computer 14600, a reproduction history of the video service is stored in the user DB 14100. When a request to reproduce this video service is received from the smart phone 14500, the cloud computing server 14000 searches for and reproduces this video service, based on the user DB 14100. When the smart phone 14500 receives a video data stream from the cloud computing server 14000, a process of reproducing video by decoding the video data stream is similar to an operation of the mobile phone 12500 described above with reference to FIG. 24.

The cloud computing server 14000 may refer to a reproduction history of a desired video service, stored in the user DB 14100. For example, the cloud computing server 14000 receives a request to reproduce a video stored in the user DB 14100, from a user terminal. If this video was being reproduced, then a method of streaming this video, performed by the cloud computing server 14000, may vary according to the request from the user terminal, i.e., according to whether the video will be reproduced, starting from a start thereof or a pausing point thereof. For example, if the user terminal requests to reproduce the video, starting from the start thereof, the cloud computing server 14000 transmits streaming data of the video starting from a first frame thereof to the user terminal. If the user terminal requests to reproduce the video, starting from the pausing point thereof, the cloud computing server 14000 transmits streaming data of the video starting from a frame corresponding to the pausing point, to the user terminal.

In this case, the user terminal may include a video decoding apparatus as described above with reference to FIGS. 1A to 23. As another example, the user terminal may include a video encoding apparatus as described above with reference to FIGS. 1 to 23. Alternatively, the user terminal may include both the video decoding apparatus and the video encoding apparatus as described above with reference to FIGS. 1A to 23.

Various applications of a video encoding method, a video decoding method, a video encoding apparatus, and a video decoding apparatus according to embodiments described above with reference to FIGS. 1 to 23 have been described above with reference to FIGS. 24 to 30. However, methods of storing the video encoding method and the video decoding method in a storage medium or methods of implementing the video encoding apparatus and the video decoding apparatus in a device, according to various embodiments, are not limited to the embodiments described above with reference to FIGS. 24 to 30.

The exemplary embodiments may be written as computer programs and may be implemented in general-use digital computers that execute the programs using a computer-readable recording medium. Examples of the computer-readable recording medium include magnetic storage media (e.g., ROM, floppy discs, hard discs, etc.) and optical recording media (e.g., CD-ROMs, or DVDs).

The invention is set out in the appended claims.

**Claims**

1. A video decoding method comprising:

   receiving a data stream comprising network abstraction layer, NAL, units;
   the method **characterized by**:

      obtaining constraint information (1710) regarding an arrangement method of samples of a picture that includes a 1 bit parameter indicating progressive scan information, 1 bit parameter indicating interlaced scan information, 1 bit parameter indicating non-frame packing constraint information, 1 bit parameter indicating frame constraint information, and 44 bit reserved bits from a profile_tier_level() syntax structure (1700) included in a video parameter set raw byte sequence payload, RBSP, area from among the NAL units; and

determining whether reconstructed samples of the picture are arranged in the progressive scan type based on the progressive scan information;

and determining whether the reconstructed samples of the picture are arranged in the interlaced scan type based on the interlaced scan information.

**Patentansprüche**

1. Videodecodierungsverfahren, umfassend:

Empfangen eines Datenstroms, der Netzabstraktionsschicht- bzw. NAL-Einheiten umfasst;
wobei das Verfahren durch Folgendes gekennzeichnet ist:

Erhalten von Beschränkungsinformationen (1710) bezüglich eines Anordnungsverfahrens von Abtastwerten eines Bildes, das einen 1-Bit-Parameter, der progressive Abtastinformationen angibt, einen 1-Bit-Parameter, der Zeilensprungabtastinformationen angibt, einen 1-Bit-Parameter, der Nicht-Rahmenpackungsbeschränkungsinformationen angibt, einen 1-Bit-Parameter, der Rahmenbeschränkungsinformationen angibt, und 44 Bit reservierte Bits von einer profile_tier_level()-Syntax-Struktur (1700), die in einem Videoparametersatz-Rohbytesequenznutzdaten- bzw. -RBSP-Bereich aus den NAL-Einheiten enthalten ist, beinhaltet; und
Bestimmen, ob rekonstruierte Abtastwerte des Bildes im progressiven Abtasttyp angeordnet sind, basierend auf den progressiven Abtastinformationen;

und Bestimmen, ob die rekonstruierten Abtastwerte des Bildes im Zeilensprungabtastungstyp angeordnet sind, basierend auf den Zeilensprungabtastinformationen.

**Revendications**

1. Procédé de décodage vidéo comprenant :

la réception d'un flux de données comprenant des unités de couche d'abstraction réseau, NAL ;
le procédé étant **caractérisé par** :

l'obtention d'informations de contraintes (1710) concernant un procédé d'agencement d'échantillons d'une image qui incluent un paramètre à 1 bit indiquant des informations de balayage progressif, un paramètre à 1 bit indiquant des informations de balayage entrelacé, un paramètre à 1 bit indiquant des informations de contraintes de non combinaison de trames, un paramètre à 1 bit indiquant des information de contraintes de trame, et 44 bits réservés d'une structure de syntaxe niveau-rang-profil() (1700) incluse dans une zone de charge utile de séquence d'octets bruts, RBSP, d'ensemble de paramètres vidéo parmi les unités NAL ; et
la détermination du fait que des échantillons reconstruits de l'image sont ou non agencés selon le type de balayage progressif à partir des informations de balayage progressif ; et

la détermination du fait que les échantillons reconstruits de l'image sont ou non agencés selon le type de balayage entrelacé à partir des informations de balayage entrelacé.

# FIG. 1

100

| | 120 | | 130 |
| PICTURE ENCODER | → | DATA STREAM GENERATOR | → DATA STREAM |

# FIG. 2

200

DATA STREAM → DATA OBTAINER (220) → PICTURE DECODER (230) → PICTURE

# FIG. 3

| 64 | 64 | 32 | 32 |
|---|---|---|---|
| 64×64 | 64×32 | 32×64 | 32×32 |

| 32 | 32 | 16 | 16 |
|---|---|---|---|
| 32×32 | 32×16 | 16×32 | 16×16 |

| 16 | 16 | 8 | 8 |
|---|---|---|---|
| 16×16 | 16×8 | 8×16 | 8×8 |

| 8 | 8 | 4 | 4 |
|---|---|---|---|
| 8×8 | 8×4 | 4×8 | 4×4 |

315

RESOLUTION:1920×1080
MAXIMUM SIZE OF CODING UNIT:64
MAXIMUM DEPTH=2

— 310

RESOLUTION:1920×1080
MAXIMUM SIZE OF CODING UNIT:64
MAXIMUM DEPTH=3

— 320

RESOLUTION:352×288
MAXIMUM SIZE OF CODING UNIT:16
MAXIMUM DEPTH=1

— 330

335  325

# FIG. 4

EP 2 947 879 B1

# FIG. 5

500

EP 2 947 879 B1

# FIG. 6

MAXIMUM HEIGHT
AND MAXIMUM
WIDTH OF
CODING UNIT=64          MAXIMUM DEPTH =3

LCU

600

PREDICTION
UNIT/
PARTITION

610  64×64  (64, 64)
612  64×32  (64, 32)
614  32×64  (32, 64)
616  32×32  (32, 32)

620  32×32  (32, 32)
622  32×16  (32, 16)
624  16×32  (16, 32)
626  16×16  (16, 16)

630  16×16  (16, 16)
632  16×8   (16, 8)
634  8×16   (8, 16)
636  8×8    (8, 8)

SCU

640  8×8    (8, 8)
642  8×4    (8, 4)
644  4×8    (4, 8)
646  4×4    (4, 4)

DEEPER CODING UNIT

30

# FIG. 7

CODING UNIT (710)

64

64×64

TRANSFORMATION
UNIT (720)

32

32

32×32

# FIG. 8

PARTITION TYPE (800)

2N　802
2N

CU_0

64×64

2N　804
N
0
1

N　806
2N
0　1

N　808
N
0　1
2　3

PREDICTION MODE (810)

812
INTRA MODE

814
INTER MODE

816
SKIP MODE

SIZE OF TRANSFORMATION UNIT (820)

822　824

INTRA

826　828

INTER

FIG. 9

## FIG. 10

CODING UNIT (1010)

## FIG. 11

PREDICTION UNIT (1060)

# FIG. 12

TRANSFORMATION UNIT (1070)

# FIG. 13

CU
/— 1300

| 1302 | 1312 | 1314 |
|------|------|------|
|      | 1316 | 1318 |
| 1304 | 1306 |      |

PU

| 1322 | 1324 | 1326 | 1328 | 1332 | 1334 | 1336 | 1338 |
|------|------|------|------|------|------|------|------|
| 2Nx2N | 2NxN | Nx2N | NxN | 2NxnU | 2NxnD | nLx2N | nRx2N |

TU

1342
TU size flag=0

1344
TU size flag=1

TU

1352
TU size flag=0

1354
TU size flag=1

EP 2 947 879 B1

# FIG. 14

```
( START )
    │
    ▼
┌─────────────────────────────────────────┐
│     ENCODE SAMPLES OF PICTURE           │──── 1410
└─────────────────────────────────────────┘
    │
    ▼
┌─────────────────────────────────────────┐
│ DETERMINE CONSTRAINT INFORMATION ABOUT  │
│ SAMPLE ARRANGEMENT TYPE BASED ON        │──── 1420
│ ARRANGEMENT METHOD OF SAMPLES OF        │
│ ENCODED PICTURE                         │
└─────────────────────────────────────────┘
    │
    ▼
┌─────────────────────────────────────────┐
│ GENERATE DATA STREAM INCLUDING NAL      │
│ UNITS INCLUDING CONSTRAINT INFORMATION  │──── 1430
└─────────────────────────────────────────┘
    │
    ▼
 ( END )
```

# FIG. 15

```
( START )
    │
    ▼
┌─────────────────────────────────────────┐
│ RECEIVE DATA STREAM INCLUDING NAL UNITS │──── 1510
└─────────────────────────────────────────┘
    │
    ▼
┌─────────────────────────────────────────┐
│ OBTAIN CONSTRAINT INFORMATION ABOUT     │
│ PICTURE SAMPLE ARRANGEMENT TYPE FROM    │──── 1520
│ DATA STREAM                             │
└─────────────────────────────────────────┘
    │
    ▼
┌─────────────────────────────────────────┐
│ DETERMINE ARRANGEMENT METHOD OF         │
│ RECONSTRUCTED SAMPLES BASED ON          │──── 1530
│ CONSTRAINT INFORMATION                  │
└─────────────────────────────────────────┘
    │
    ▼
 ( END )
```

# FIG. 16

/1600

| aligned(8) class HEVCDecoderConfigurationRecord { |
|---|
|     unsigned int(8)   configurationVersion = 1; |
|     unsigned int(2)  profile_space; |
|     unsigned int(1)  tier_flag; |
|     unsigned int(5)  profile_idc; |
|     unsigned int(32)  profile_compatibility_indications; |
|     unsigned int(48)  constraint_indicator_flags; ——1610 |
|     ... |
|     bit(4)  reserved = '1111'b; ——1630 |
|     unsigned int(12)  min_spatial_segmentation_idc; ——1620 |
|     ... |
|     } |

# FIG. 17

1700

| profile_tier_level( maxNumSubLayersMinus1 ) { | Dscriptord |
|---|---|
| general_profile_space | u(2) |
| general_tier_flag | u(1) |
| general_profile_idc | u(5) |
| for( j = 0; j < 32; j++ ) | |
|    general_profile_compatibility_flag[ j ] | u(1) |
| general_progressive_source_flag | u(1) |
| general_interlaced_source_flag | u(1) |
| general_non_packed_constraint_flag | u(1) |
| general_frame_only_constraint_flag | u(1) |
| general_reserved_zero_44bits | u(44) |
| general_level_idc | u(8) |
| … .. | |
| for( i = 0; i < maxNumSubLayersMinus1; i++ ) { | |
|   if( sub_layer_profile_present_flag[ i ] ) { | |
|     sub_layer_profile_space[ i ] | u(2) |
|     sub_layer_tier_flag[ i ] | u(1) |
|     sub_layer_profile_idc[ i ] | u(5) |
|     for( j = 0; j < 32; j++ ) | |
|       sub_layer_profile_compatibility_flag[ i ][ j ] | u(1) |
|     sub_layer_progressive_source_flag[ i ] | u(1) |
|     sub_layer_interlaced_source_flag[ i ] | u(1) |
|     sub_layer_non_packed_constraint_flag[ i ] | u(1) |
|     sub_layer_frame_only_constraint_flag[ i ] | u(1) |
|     sub_layer_reserved_zero_44bits[ i ] | u(44) |
| … | |
| } | |

1710 { (general)

1720 { (sub_layer)

# FIG. 18

EP 2 947 879 B1

FIG. 19

1960 — FRAME 0

1980 — FRAME 1

1920 — HALF FRAME 0

1940 — HALF FRAME 1

1930 — UP-CONVERSION

1950 — UP-CONVERSION

1910 — TOP-BOTTOM PACKING REALIGNMENT

1900

# FIG. 20

# FIG. 21

EP 2 947 879 B1

# FIG. 22

2200

| vui_parameters( ) { | Descriptor |
|---|---|
| aspect_ratio_info_present_flag | u(1) |
| ... | |
| overscan_info_present_flag | u(1) |
| ... | |
| video_signal_type_present_flag | u(1) |
| ... | |
| chroma_loc_info_present_flag | u(1) |
| ... | ... |
| bitstream_restriction_flag | u(1) |
| if( bitstream_restriction_flag ) { | |
| tiles_fixed_structure_flag | u(1) |
| motion_vectors_over_pic_boundaries_flag | u(1) |
| restricted_ref_pic_lists_flag | u(1) |
| min_spatial_segmentation_idc | ue(v) |
| max_bytes_per_pic_denom | ue(v) |
| max_bits_per_min_cu_denom | ue(v) |
| log2_max_mv_length_horizontal | ue(v) |
| log2_max_mv_length_vertical | ue(v) |
| } | |
| } | |

2210

# FIG. 23

# FIG. 24

Se

Tr

DISC (26000)

# FIG. 25

26700

26800

26000

# FIG. 26

CAMERA (12600)

COMPUTER (12100)

PDA (12200)

VIDEO CAMERA (12300)

MOBILE PHONE(12500)

(11800)

(11900)

(11700)

(12000)

COMMUNICATION NETWORK (11400)

11000

STREAMING SERVER (11300)

INTERNET (11100)

SERVICE PROVIDER (11200)

# FIG. 27

FIG. 28

# FIG. 29

12820

MONITOR (12840)

BROADCASTING SATELLITE (12900)

REPRODUCING APPARATUS (12830)

BROADCASTING STATION (12890)

ANTENNA (12910)

AUTOMOBILE (12920)

ANTENNA (12860)

AUTOMOBILE NAVIGATION SYSTEM (12930)

CABLE ANTENNA (12850)

SET-TOP BOX (12870)

TV MONITOR (12880)

12960

TV (12810)

12970 — SD

HARD DISC RECORDER (12950)

EP 2 947 879 B1

# FIG. 30

EP 2 947 879 B1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description

- AHG9: Indication of frame-packed or interlaced video. **Y-K WANG (QUALCOMM.** MPEG Meeting. Motion Picture Expert Group, 15 October 2012, vol. 102

- **A VETRO et al.** Overview of the Stereo and Multiview Video Coding Extensions of the H.264/MPEG-4 AVC Standard. *Proceedings of the IEEE,* 01 April 2011, vol. 99 (4), 626-642